(19) Europäisches Patentamt
European Patent Office
Office européen des brevets

(11) **EP 2 620 563 A1**

(12) **EUROPEAN PATENT APPLICATION**
published in accordance with Art. 153(4) EPC

(43) Date of publication:
**31.07.2013 Bulletin 2013/31**

(51) Int Cl.:
**E04B 1/14** (2006.01)    **E04B 1/16** (2006.01)
**E04B 1/30** (2006.01)    **E04B 1/48** (2006.01)
**E04B 2/86** (2006.01)    **G21C 13/00** (2006.01)

(21) Application number: **11826741.8**

(22) Date of filing: **09.09.2011**

(86) International application number:
**PCT/JP2011/070552**

(87) International publication number:
**WO 2012/039295 (29.03.2012 Gazette 2012/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2011   JP 2011040009
25.02.2011   JP 2011040007
25.02.2011   JP 2011040006
25.02.2011   JP 2011040004
16.12.2010   JP 2010280561
20.10.2010   JP 2010235468
24.09.2010   JP 2010213808**

(71) Applicant: **Mitsubishi Heavy Industries, Ltd.
Tokyo 108-8215 (JP)**

(72) Inventors:
• **SHIMIZU Hiroshi
Tokyo 108-8215 (JP)**

• **OKAMOTO Hiromu
Tokyo 108-8215 (JP)**
• **FUJIMOTO Ryo
Tokyo 108-8215 (JP)**
• **ISEKI Hiroyuki
Kakogawa-shi
Hyogo 675-0031 (JP)**
• **SEKIMOTO Hisashi
Hiroshima-shi
Hiroshima 733-0036 (JP)**
• **TAKAGI, Katsumi
Tokyo 1088215 (JP)**
• **HAGISHITA, Takao
Tokyo 1088215 (JP)**

(74) Representative: **HOFFMANN EITLE
Patent- und Rechtsanwälte
Arabellastrasse 4
81925 München (DE)**

(54) **ACCESSORY ATTACHING STRUCTURE, DESIGN SYSTEM AND DESIGN METHOD OF STEEL PLATE REINFORCED CONCRETE STRUCTURE, CONSTRUCTION METHOD OF STEEL PLATE REINFORCED CONCRETE STRUCTURE, AND STEEL PLATE REINFORCED CONCRETE STRUCTURE**

(57)    The accessory attachment structure for attaching an accessory to a steel plate-reinforced concrete structure, the steel plate-reinforced concrete structure being provided with a steel plate frame, bars fixedly installed on an inner face of an outside steel plate, and concrete, the accessory attachment structure includes an attachment plate in which one face thereof is attached to the outside steel plate and the accessory is attached to the other face thereof. The size of the other face of the attachment plate is larger than that of a whole attachment face to be attached to the attachment plate of the accessory, the size if the one face is equal to or greater than the other face, and the length of the attachment plate in any direction along the one face of the attachment plate is at least two times greater than a mutual interval between the bars.

FIG. 1

EP 2 620 563 A1

**Description**

Technical Field

The present invention relates to an accessory attachment structure which attaches an accessory such as a support for supporting a long object, for example, piping, a duct, a cable tray and an electrical wire conductor to a steel plate-reinforced concrete structure (hereinafter, referred to as an SC structure) in which concrete is surrounded by a plurality of outside steel plates, a plurality of bars are disposed inside the concrete and also fixed on the outside steel plate. The present invention also relates to a design system and a design method of an SC structure, a construction method of an SC structure and an SC structure.
The present application claims the right of priority to Japanese Patent Application No.2010-213808 filed on September 24, 2010, in Japan, Japanese Patent Application No.2010-235468 filed on October 20, 2010, in Japan, Japanese Patent Application No.2010-280561 filed on December 16, 2010, in Japan, Japanese Patent Application No.2011-040004 filed on February 25, 2011, in Japan, Japanese Patent Application No. 2011-040006 filed on February 25, 2011, in Japan, Japanese Patent Application No. 2011-040007 filed on February 25, 2011, in Japan, and Japanese Patent Application No.2011-040009 filed on February 25, 2011, in Japan, with the contents cited herewith.

Background Art

A reinforced concrete structure (hereinafter, referred to as an RC structure) in which reinforcing steel is used as a tensionmember is known as a general concrete structure. In recent years, attention has been given to a steel plate-reinforced concrete structure which uses steel plates as the tension members, in addition to the RC structure.
The SC structure is described, for example, in Patent Document 1 and Patent Document 2. The SC structure includes a steel plate frame formed with a plurality of outside steel plates, a tie bar which connects a plurality of outside steel plates with each other, a stud fixed on an inner face of each outside steel plate, and concrete installed inside the steel plate frame.
The SC structure is advantageous over the RC structure in the following points of (1) to (3).

(1) Reduction in construction schedule

Outside steel plates used in the SC structure also function as a frame for installing concrete, thereby eliminating the need for reinforcement work and frame work as required in the RC structure. Therefore, site work is drastically reduced to shorten the construction schedule.

(2) Reduction of adverse effects on environment

Since outside steel plates used in the SC structure also function as a frame and ultimately remain in the structure, thus eliminates the need for discarding the frame as required in the RC structure. Therefore, it is possible to reduce waste and lower adverse effects on the environment.

(3) Improvement in attachment and construction properties of accessory

In the RC structure, on attachment of an accessory such as a support for supporting piping to the RC structure, a bolt or the like is disposed at a predetermined attachment position of the accessory and concrete is thereafter installed. After the concrete is hardened, the accessory is connected to a part of the bolt whichprotrudes from a wall surface of the RC structure. In contrast, in the SC structure, an accessory can be directly joined on an outside steel plate by welding and others. Therefore, it is not necessary to determine in advance an attachment position of the accessory. Further, the accessory can be attached, irrespective of concrete hardening time. Thus, in the SC structure, it is possible to freely decide timing of attaching the accessory and an attachment position thereof and also improve the attachment and construction properties of the accessory.
Further, a general method for reinforcing an anchorage zone of an accessory includes a method for welding a reinforcing member consisting of a steel member at an appropriate site of the anchorage zone for reinforcement and a method for fixing a reinforcing member through bolt holes, as disclosed in Patent Document 2. Specifically, in Patent Document 2, a metal plate unit is formed in advance in which a duct for electrical wiring is attached inside one metal plate in a pair of metal plates disposed so as to be opposed to each other, and concrete is installed inside the metal plate unit. In this case, the pair of metal plates are connected with a tie bar installed therebetween. Further, a stud for reinforcement is installed so as to protrude on an inner face of the pair of the metal plates. This stud is embedded into the concrete, thereby preventing the metal plate from peeling off from the concrete.

Still further, for example, as shown in Patent Document 2 and Patent Document 3, the SC structure is constituted with a steel plate frame which is formed with a plurality of outside steel plates, a tie bar which connects a plurality of outside steel plates together, a stud which is fixedly installed on an inner face of each outside steel plate, and concrete which is installed inside the steel plate frame.

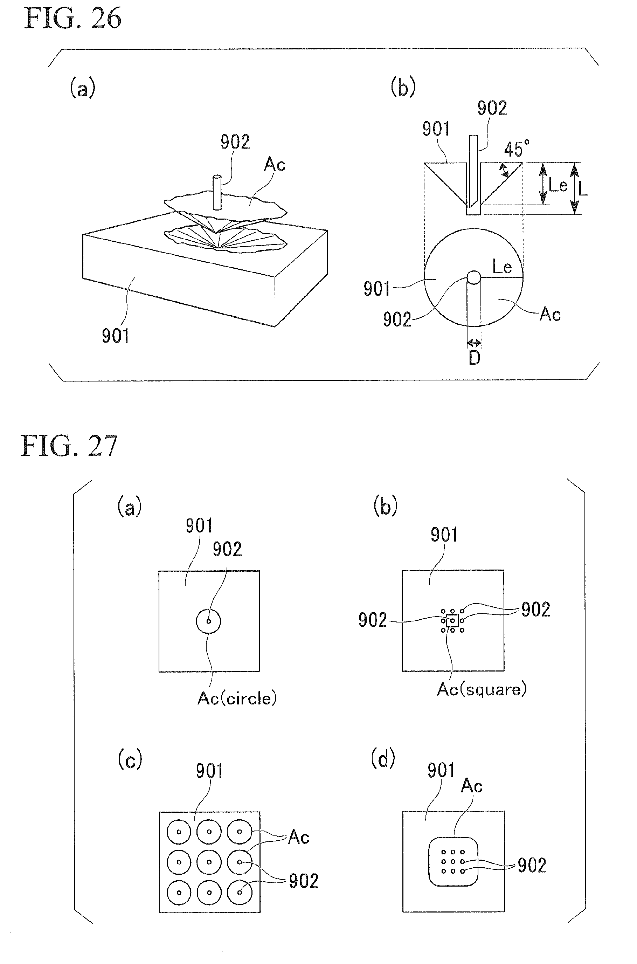

In designing the above-described SC structure, as a failure mode of a stud 902 embedded into concrete 901, evaluation is made for two types of failure mode, that is, cone failure which is carried out at an angle of 45° at the center of the stud shown in Fig. 26 (a) and Fig. 26 (b) and steel member failure (stud breakage). In this evaluation, in a currently available method for evaluating the load-bearing capacity (strength) of the stud in cone failure, the load-bearing capacity of one stud 902 is in general evaluated on the basis of the following formula (1). Here, in Fig. 26(b) and in the formula (1), Le is the embedded depth of stud; D, the diameter of stud; φ, the reduction coefficient (safety coefficient); Ac, the projection area; and Fc, the concrete strength.

[Formula 1]

$$F = \phi \times Ac \times \sqrt{Fc} \qquad (1)$$

As shown in the above-described formula (1), the load-bearing capacity of the stud 902 in cone failure depends on the projection area Ac. As shown in Fig. 27(a), where one stud 902 is provided, a circular area having the embedded depth of Le as a radius is given as an effective projection area Ac. As shown in Fig. 27 (b), where a plurality of studs 902 are disposed in a group and also an interval between the studs 902 is narrow and a circular area having the embedded depth of Le as a radius of each of the studs 902 is overlapped with another, a rectangular area in which an interval between mutually adjacent studs 902 is given as one side is given as an effective projection area Ac. As shown in Fig. 27(c), where the plurality of studs 902 are disposed in a group but an interval between the studs 902 is sufficiently wide, a circular area having the embedded depth of Le as a radius is given as an effective projection area Ac. In addition, where the studs 902 are disposed in a group so that the effective projection areas Ac are overlapped with each other and a pull-out load is applied uniformly (uniform loading condition), a large effective projection area Ac is set to evaluate the load-bearing capacity of the stud in cone failure as shown in Fig. 27(d).

Prior Art Documents

Patent Documents

Patent Document 1: Japanese Patent Application, First Publication No. 2001-248246
Patent Document 2: Japanese Patent Application, First Publication No.2003-328433
Patent Document 3: Japanese Patent Application, First Publication No.2007-169968

Summary of the Invention

Problems to be Solved by the Invention

As so far described, the SC structure is advantageous in having a high degree of freedom in terms of attachment of an accessory. However, depending on an attachment position of the accessory, a load applied to each one of the studs (and tie bar) will vary, by which it is necessary to decide the attachment position of the accessory so as to be in alignment with a position of the stud.

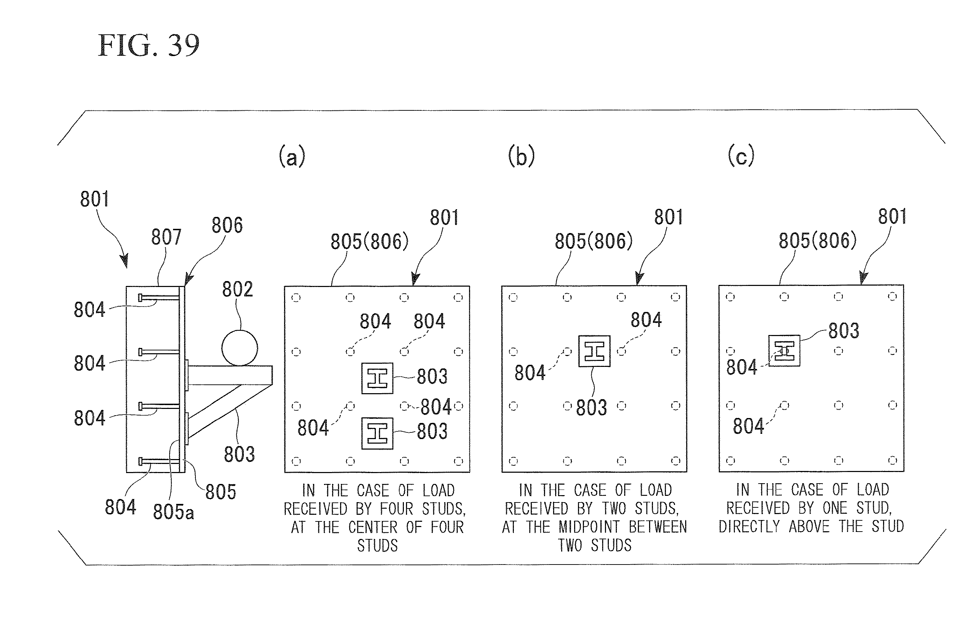

For example, as shown in Fig. 39(a), where an accessory 803 such as a piping support is joined to an outside steel plate 805 so as to be positioned at the center of four studs 804, these four studs 804 receive a tension load, etc., from the accessory 803. As shown in Fig. 39(b), where the accessory is joined between two studs 804, these two studs receive a tension load, etc., from the accessory 803. As shown in Fig. 39(c), where the accessory is joined directly to one stud 804, one stud 804 receives a tension load, etc., from the accessory 803. Therefore, the stud 804 varies in load bearing depending on an attachment position of the accessory 803, thus resulting in a different load being applied to each one of the studs. Therefore, where an SC structure 801 receives a great load, it is necessary to attach and construct the accessory 803 in such a manner that the accessory 803 is not joined to a position directly on one stud 804 for the purpose of reducing a load applied to each one of the studs. As a result, there is a restriction on an attachment position of the accessory 803. Further, where the accessory is attached to any given place on an outside steel plate, it is necessary to keep a load applied to the SC structure 801 down to an allowable load which can be received by one stud 804.

The present invention has been made in view of the above-described problems, a first object of which is to provide an accessory attachment structure which is capable of attaching an accessory to any given position even where an SC structure receives a great load of the accessory.

Further, in the SC structure, as described above, a load applied to each one of the studs or each one of the tie bars will vary depending on an attachment position of the accessory. It is therefore necessary to decide the attachment position of the accessory so as to be in alignment with a position of the stud or the tie bar.

However, since the stud 804 is disposed on an inner face 805a of the outside steel plate 805 (inner face of the steel plate frame 806) and also embedded into concrete 807, it is difficult to locate the position of the stud. Therefore, on attachment of the accessory 803, the position of the stud 804 needs to be confirmed by referring to a design drawing or the like, which requires time for construction. Time is also required in designing the attachment position of the accessory 803.

Therefore, the present invention has been made in view of the above-described problem, a second object of which is to provide an accessory attachment structure which makes it possible to easily decide an attachment position of an accessory.

Further, a third object of the present invention is to provide an accessory attachment structure which is increased in rigidity by a simple and lightweight structure and in which an accessory can be attached on confirmation of the strength of an attachment position of the accessory.

Still further, in a conventional method of designing the SC structure, as shown in Fig. 27 (b), where a great pull-out load is applied to one stud 902 at the center in a state that a uniform load is applied to the studs 902 disposed in a group, an effective projection area Ac is made smaller than a case shown in Fig. 27(a) where one stud 902 is pulled out. As a result, the load-bearing capacity is evaluated to be smaller in cone failure. That is, in a conventional method for designing the SC structure, on the evaluation, no consideration is given to the pull-out capacity associated with pulling out of the stud 902 in a case where a body load (a load conceivable in design such as its own weight of the SC structure and seismic load other than a load of an accessory) is applied to the SC structure in which the studs 902 are disposed in a group.

Therefore, a fourth object of the present invention is to provide a design system of an SC structure and a design method of an SC structure in which a stud can be rationally evaluated for load-bearing capacity thereof by reviewing a method for determining an effective projection area in cone failure for a conventional design method of an SC structure.

Further, a fifth object of the present invention is to provide an SC structure in which a stud can be rationally evaluated for the load-bearing capacity thereof, as compared with a case in which a plurality of studs are disposed so as to be arranged vertically and transversely (a case where they are arranged in a lattice form).

Still further, a sixth object of the present invention is to provide a construction method of an SC structure and an SC structure which are capable of attaching and constructing an accessory, with a load applied to each one of the studs reliably kept low, and also capable of shortening the time necessary for constructing the accessory and time necessary for designing an attachment position of the accessory, as compared with a conventional case.

In addition, in a conventional SC structure, a stud is joined to an inner face of an outside steel plate by fillet welding. Construction of the stud by welding partially contributes to an increase in construction man-hours and also an increase in construction costs.

Therefore, a seventh object of the present invention is to provide an SC structure which is capable of reducing man-hours on construction of a stud and construction costs and also capable of reducing the time necessary for constructing an accessory and time necessary for designing an attachment position of the accessory.

Means for Solving the Problems

In order to attain the above-described first obj ect, the accessory attachment structure of the present invention is an accessory attachment structure for attaching an accessory to an SC structure which is provided with a steel plate frame formed with a plurality of outside steel plates, a plurality of bars fixedly installed on an inner face of the outside steel plate, and concrete installed inside the steel plate frame. The accessory attachment structure is provided with an attachment plate in which one face thereof is attached to the outside steel plate and the accessory is attached to the other face thereof, the size of the other face of the attachment plate is larger than that of a whole attachment face to be attached to the attachment plate of the accessory, and the size of the one face of the attachment plate is equal to or greater than the other face. And, the length of the attachment plate in any direction along the one face of the attachment plate is at least two times greater than a mutual interval between the plurality of bars.

According to the present invention, on attachment of an attachment plate to any position of the outside steel plate, at least two bars are to be present in a region where the attachment plate is attached. Therefore, in the attachment structure, where the accessory is disposed at any position of the outside steel plate, tension load, etc. , from the accessory can be received by two or more bars. In other words, it is possible to reduce a bearing load received by each one of the bars. Thus, according to the attachment structure, even where the SC structure receives a relatively great load of the accessory, it is possible to attach the accessory to any given position.

In the accessory attachment structure, it is acceptable that a plurality of the accessories be attached to the attachment plate and the size of the other face of the attachment plate be larger than that of attachment faces of each of the plurality of accessories where the plurality of accessories are attached to the attachment plate.

In this case, the attachment plate can be reduced in the number thereof in relation to a plurality of accessories and thereby man-hours on attachment can also be reduced. Further, in the attachment structure, the attachment plate can be further increased in area of one face per accessory, as compared with a case where the attachment plate is installed for each of the plurality of accessories. It is thus possible to further increase the load of the accessory received by the SC structure.

In the accessory attachment structure, it is acceptable that the accessory be provided with the plurality of attachment faces which are spaced apart from each other, and the size of the other face of the attachment plate be larger than that of the plurality of attachment faces of the accessory where the accessory is attached to the attachment plate.

In this case, as with the above-described attachment structure, it is possible to reduce the number of attachment plates in relation to a plurality of attachment faces of the accessory. Thereby, man-hours on attachment can be reduced. Further, in the attachment structure, the attachment plate can be increased in area of one face per attachment face of the accessory, as compared with a case where the attachment plate is installed for each of a plurality of attachment faces. It is therefore possible to increase the load of the accessory received by the SC structure.

In the above-described accessory attachment structure, it is acceptable that the attachment plate be gradually decreased in area of a cross-section perpendicular to a direction from the one face to the other face in moving along the direction. Further, in the accessory attachment structure, it is also acceptable that the attachment plate be provided with a plurality of plates which are stacked in a direction from the one face to the other face and also joined together, and the plurality of plates be such that a plate on the other face is smaller in area of a cross-section perpendicular to the above-described direction than a plate on the one face.

In this case, where the other face of the attachment plate is made smaller in area than the one face thereof, it is possible to reduce the weight of the attachment plate without reducing the load of the accessory received by the SC structure.

In the above-described accessory attachment structure, it is acceptable that the attachment plate be joined to the outside steel plate by welding.

In the attachment structure, the accessory can be attached to any given position on the outside steel plate without installing in advance a bolt or the like on the outside steel plate.

In order to attain the above-described second object, the accessory attachment structure of the present invention is an accessory attachment structure for attaching an accessory to an SC structure which is provided with a steel plate frame formed with a plurality of outside steel plates, concrete installed inside the steel plate frame, and a plurality of tie bars passing through the outside steel plate and the concrete. The accessory attachment structure is provided with an attachment plate in which one face thereof is attached to an outer face of the outside steel plate and the accessory is attached to the other face thereof, and an external thread portion or an internal thread portion which is exposed on an outer face of the outside steel plate, and provided with the tie bar. The attachment plate is fastened and fixed to the outside steel plate by a nut or a bolt which is screwed into the external thread portion or the internal thread portion of at least one of the plurality of tie bars.

The present invention is a structure such that the attachment plate is directly fixed to the tie bar. Therefore, stress resulting from a load of the accessory can be applied to the tie bar via the attachment plate. Further, an end of the tie bar is exposed and the external thread portion which is screwed into a nut is installed at the end. And, the attachment plate can be attached to any given tie bar after visual observation is made for a site at which the tie bar is installed. Therefore, on attachment of the accessory, it is possible to easily decide an attachment position and also reduce a load received by each one of the tie bars.

The accessory attachment structure may be such that both ends of the tie bar are screwed into the outside steel plate and integrally joined to the attachment plate.

In this case, since a weldingprocess is not required, it is possible to construct the SC structure easily.

In order to attain the above-described third obj ect, the accessory attachment structure of the present invention is an accessory attachment structure in which a support member is attached via an attachment plate to the surface of an SC structure to which concrete is installed between a pair of outside steel plates opposed to each other at a predetermined interval. The pair of outside steel plates are connected only by a tie bar, the both ends of which are fixed to each of the outside steel plates, and the attachment plate is attached to a region to which at least a plurality of the tie bars are attached.

According to the present invention, the attachment plate of the support member can be attached after confirmation of the presence of the tie bar. It is therefore possible to easily disperse a load of the attachment plate to the plurality of tie bars substantially in a uniform manner.

The accessory attachment structure may be such that on the inner face of the outside steel plate, a rib extending along the inner face thereof is fixed.

In this case, unlike narrow and exact reinforcement by using a tie bar or a stud, a plurality of ribs are used to realize at least linear reinforcement. Thus, it is possible to efficiently disperse the load on installation of the attachment plate.

The accessory attachment structure may be such that an inner steel plate parallel to the outside steel plate is fixed to the leading end of the rib.

In this case, it is possible to secure a greater strength. In this case, it is preferable that consideration be given to positions of the inner steel plate so as to be along the rib in such a manner that concrete can be evenly installed between the outside steel plates without preventing the influx of ready-mixed concrete on installing the concrete.

The accessory attachment structure may be such that the rib arranges a plurality of flat plate members in a lattice form.

In this case, the flat plate members are arranged in a lattice form to constitute the rib, thus making it possible to improve the strength of the rib to a greater extent. Further, the rib is less likely to prevent the influx of ready-mixed concrete.

The accessory attachment structure may be such that the rib arranges a plurality of angle bars, each of which has an approximately L-shaped cross-section, in a lattice form.

In this case, one side of an approximately L-shaped cross-section is allowed to come into contact with the outside steel plate and be fixed. Thereby, the rib can be fixed to the outside steel plate simply and rigidly.

The accessory attachment structure may be such that the rib arranges a plurality of channel bars, each of which has an approximately C-shaped cross-section, in a lattice form.

In this case, one side of the channel bar is allowed to come into contact with the outside steel plate and be fixed. Thereby, the rib can be fixed to the outside steel plate simply and rigidly.

In order to attain the above-described fourth object, the design system of the SC structure of the present invention is a design system of an SC structure which is provided with a steel plate frame formed with a plurality of outside steel plates, a stud fixedly installed on an inner face of the outside steel plate, and concrete installed inside the steel plate frame. The design system of the SC structure is provided with a structure condition input device which inputs structure conditions including a stud interval and a stud length, a body load-calculating device which calculates a body load on the basis of the structure conditions input by the structure condition input device, a reference load-calculating device which calculates a reference load which can be supported by each one of the studs where supported by a plurality of studs as a whole, a load ratio-calculating device which calculates a load ratio of body load to reference load, a storage device which stores a relationship between the load ratio and an effective projection area, an effective projection area-calculating device which calculates the effective projection area from the load ratio by referring to a relationship between the load ratio and the effective projection area stored by the storage device, and an load-calculating device which calculates a load including an accessory load which can be supported by one stud on the basis of the effective projection area calculated by the effective projection area-calculating device.

The design method of the SC structure of the present invention is a design method of an SC structure which is provided with a steel plate frame formed with a plurality of outside steel plates, a stud fixedly installed on an inner face of the outside steel plate, and concrete installed inside the steel plate frame. The design method includes: calculating a body load which is determined on the basis of structure conditions including a stud interval and a stud length; calculating a reference load which can be supported by each one of the studs is determined where the load is supported by the plurality of studs as a whole; calculating a load ratio of body load to reference load which is determined; calculating an effective projection area which is determined from the load ratio by referring to a relationship between a predetermined load ratio and the effective projection area; and calculating a load including an accessory load which can be supported by each one of the studs is determined on the basis of the thus determined effective projection area.

In order to attain the above-described fifth object, the SC structure of the present invention is an SC structure which is provided with a steel plate frame formed with a plurality of outside steel plates, a plurality of studs fixedly installed on an inner face of the outside steel plate and concrete installed inside the steel plate frame, in which the plurality of studs are arranged in a zigzag form.

In order to attain the above-described sixth object, the construction method of the SC structure of the present invention is a construction method of an SC structure which is provided with a steel plate frame formed with a plurality of outside steel plates, a stud installed in a protruded manner from an inner face of the outside steel plate to the inside of the steel plate frame, concrete installed inside the steel plate frame, and an attachment device installed on an outer face of the outside steel plate to attach an accessory. The construction method includes: a stud-attaching step in which fixedly installed the stud on the inner face of the outside steel plate; an attachment device-preparing step in which disposed at least a part of the attachment device at a plurality of attachment positions on the outer face of the outside steel plate to which the accessory is attached via the attachment device; a steel plate-installing step in which disposed the outside steel plate at a predetermined position to form the steel plate frame; a concrete-installing step in which installed concrete into the steel plate frame; and an accessory-installing step in which installed the accessory.

According to the present invention, in the attachment device-preparing step, at least a part of the attachment device is disposed at a plurality of attachment positions on the outer face of the outside steel plate to which an accessory can be attached. It is therefore possible to easily confirm a position of the stud and dispose at least a part of the attachment device. Next, in the accessory-installing step, the accessory is attached and installed on the attachment device, by which the accessory can be attached and constructed in a state that a load received by each one of the studs is reliably kept low.

The SC structure of the present invention is an SC structure which is provided with a steel plate frame formed with a plurality of outside steel plates, a stud installed in a protruded manner from an inner face of the outside steel plate to the inside of the steel plate frame, concrete installed inside the steel plate frame, and an attachment device which is installed on an outer face of the outside steel plate to attach the accessory. The attachment device is provided with an attachment plate which attaches and supports the accessory and a locking portion which is installed at a plurality of attachment positions on an outer face of the outside steel plate to which the accessory can be attached. And, the attachment device is constituted in such a manner that the attachment plate can be selectively locked to any of the locking portions installed at the attachment positions and be fixed accordingly.

According to the present invention, since the attachment plate is selectively locked to any of the locking portions installed at a plurality of attachment positions on the outer face of the outside steel plate to which an accessory can be attached, it is possible to attach the accessory via the attachment plate to the outer face of the outside steel plate. Accordingly, a simple operation is employed in which a plurality of attachment positions are set so as to keep low a load received by each one of the studs and the attachment plate is locked to the locking portion of the attachment device installed at the attachment position, thereby reliably attaching and constructing the accessory in a state that the load received by each one of the studs is kept low. Further, at this time, a main body thereof can be selectively locked to any of the plurality of locking portions. It is therefore possible to attach the attachment plate and also the accessory to any given attachment position.

In order to attain the above-described seventh object, the SC structure of the present invention is an SC structure which is provided with a steel plate frame formed with a plurality of outside steel plates, a stud which is fixed to the outside steel plate and installed in a protruded manner to the inside of the steel plate frame, and concrete installed inside the steel plate frame, in which a through-hole is formed on the outside steel plate so as to pass through from the inner face of the outside steel plate to the outer face, a shaft portion of the stud is inserted to the through-hole, and the stud is fixed to the outside steel plate so that the outside steel plate is held between a pair of holding portions integrally formed on the shaft portion.

Effects of the Invention

According to the accessory attachment structure of the present invention, it is possible to reduce a load received by each one of the bars. Thus, the accessory can be attached to any given position even where a load of the accessory received by the SC structure is relatively great.

Further, according to the accessory attachment structure of the present invention, stress resulting from a load of the accessory is allowed to act on a tie bar via the attachment plate. Still further, according to the accessory attachment structure of the present invention, it is possible to easily decide an attachment position on attachment of the accessory and also reduce a load received by each one of the tie bars.

Further, according to the accessory attachment structure of the present invention, it is possible to increase rigidity by a simple and lightweight structure and also attach an accessory after confirmation is made for the strength of an attachment position of the accessory.

According to the design system of the SC structure and the design method of the SC structure of the present invention, a stud can be rationally evaluated for load-bearing capacity thereof by reviewing a method for determining an effective projection area in cone failure for a conventional design method of an SC structure.

According to the SC structure of the present invention, a plurality of studs are disposed so as to be arranged in a zigzag form, thus making it possible to evaluate each stud as an individually independent stud. Further, according to the SC structure of the present invention, the stud can be evaluated rationally for load-bearing capacity thereof, as compared with a case where a plurality of studs are disposed so as to be arranged vertically and transversely (arranged in a lattice form).

According to the construction method of the SC structure and the SC structure of the present invention, a plurality of attachment positions are set so as to keep low a load received by each one of the studs, while a position of the stud is confirmed easily, and an accessory can be attached to the attachment position. Thereby, the accessory can be attached and constructed, with a load received by each one of the studs reliably kept low. It is also possible to reduce the time necessary for constructing the accessory and time necessary for designing an attachment position of the accessory, as compared with a conventional case.

According to the SC structure of the present invention, of the pair of holding portions, one of them is disposed on an outer face of the outside steel plate. Therefore, on attachment of an accessory, a position of the stud can be located from outside of the outside steel plate. Thereby, it is possible to reduce the time necessary for constructing the accessory and time necessary for designing an attachment position of the accessory.

Further, the stud is attached to the outside steel plate by using a rivet structure, a bolt and a nut, by which manhours for constructing the stud can be reduced to attain reduction of construction costs, as compared with a case where the stud is fixed to the outside steel plate by a conventional welding.

Brief Description of the Drawings

Fig. 1 shows an SC structure and an attachment structure of a First Embodiment of the present invention, in which (a) is a sectional view of the SC structure and the attachment structure and (b) is a front view of the SC structure and the attachment structure.

Fig. 2 shows an SC structure and an attachment structure of a Second Embodiment of the present invention, in which (a) is a sectional view of the SC structure and the attachment structure and (b) is a front view of the SC structure and the attachment structure.

Fig. 3 shows an SC structure and an attachment structure of a Third Embodiment of the present invention, in which (a) is a sectional view of the SC structure and the attachment structure and (b) is a front view of the SC structure and the attachment structure.

Fig. 4 shows an SC structure and an attachment structure of a modified example of the Third Embodiment of the present invention, in which (a) is a sectional view of the SC structure and the attachment structure and (b) is a front view of the SC structure and the attachment structure.

Fig. 5 is a front view of an SC structure and an attachment structure of a First Modified Example of each embodiment of the present invention.

Fig. 6 shows an SC structure and an attachment structure of a Second Modified Example of each embodiment of the present invention, in which (a) is a sectional view of the SC structure and the attachment structure and (b) is a front view of the SC structure and the attachment structure.

Fig. 7 shows an SC structure and an attachment structure of anothermodified example of the above SecondModifiedExample, in which (a) is a sectional view of the SC structure and the attachment structure and (b) is a front view of the SC structure and the attachment structure.

Fig. 8 shows an accessory attachment structure of a Fourth Embodiment of the present invention, in which (a) is a sectional view thereof and (b) is a front view thereof.

Fig. 9 is an enlarged view of the sectional view of Fig. 8.

Fig. 10 shows an accessory attachment structure of a Fifth Embodiment of the present invention, in which (a) is a sectional view thereof and (b) is a front view thereof.

Fig. 11 is an enlarged view of the sectional view of Fig. 10.

Fig. 12 shows an accessory attachment structure of a Sixth Embodiment of the present invention, in which (a) is a sectional view thereof and (b) is a front view thereof.

Fig. 13 is an enlarged view of the sectional view of Fig. 12.

Fig. 14 is a detailed view which shows a tie bar of the Sixth Embodiment.

Fig. 15 is a detailed view which shows a tie bar of a Seventh Embodiment.

Fig. 16 shows an accessory attachment structure 310A of an Eighth Embodiment of the present invention, in which (a) is a front view of major parts and (b) is a longitudinal sectional view of the major parts.

Fig. 17 shows an accessory attachment structure 310B of a Ninth Embodiment of the present invention, in which (a) is a front view of major parts and (b) is a longitudinal sectional view of the majors part taken along the line of 2B to 2B in (a).

Fig. 18 shows an accessory attachment structure 310C of a Tenth Embodiment of the present invention, in which (a) is a front view (partially broken) of major parts and (b) is a longitudinal sectional view of the major parts taken along the line of 3B to 3B in (a).

Fig. 19 shows an accessory attachment structure 310D of an Eleventh Embodiment of the present invention, in which (a) is a front view (partially broken) of major parts and (b) is a longitudinal sectional view of the major parts taken along the line of 4B to 4B in (a).

Fig. 20 is a sectional view which shows an SC structure of a Twelfth Embodiment of the present invention.

Fig. 21 shows a schematic view which shows studs disposed in the SC structure of the Twelfth Embodiment of the present invention, in which (a) is a front elevational view thereof and (b) is a plane cross-sectional view thereof.

Fig. 22 is a block diagram which shows a design system of the SC structure of the Twelfth Embodiment of the present invention.

Fig. 23 is a drawing which shows how to determine an effective projection area in the design method of the SC structure of the Twelfth Embodiment of the present invention.

Fig. 24 is a graph which shows one example of a relationship between a load ratio and an effective projection area in the design method of the SC structure of the Twelfth Embodiment of the present invention.

Fig. 25 is a graph which shows an example of a relationship between the load ratio and the load-bearing capacity of a stud in the designmethod of the SC structure of the Twelfth Embodiment of the present invention.

Fig. 26 is a drawing which shows cone failure of a stud in the SC structure.

Fig. 27 is a drawing which shows how to determine an effective projection area in a conventional design method of the SC structure.

Fig. 28 is a sectional view which shows an SC structure of the Thirteenth Embodiment of the present invention.

Fig. 29 is a plan view which shows a plurality of studs disposed in a zigzag form in the SC structure of the Thirteenth Embodiment of the present invention.

Fig. 30 is a sectional view which shows a stud of an SC structure of the Thirteenth Embodiment of the present invention.

Fig. 31 is a drawing which shows a difference in load transfer to the SC structure of the Thirteenth Embodiment of the present invention, depending on an attachment position of an accessory (attachment plate).

Fig. 32 is a drawing which shows a modified example where studs of the SC structure of the Thirteenth Embodiment of the present invention are disposed.

Fig. 33 is a sectional view which shows schematically the SC structure of the Thirteenth Embodiment of the present invention.

Fig. 34 is a sectional view which shows an SC structure of a Fourteenth Embodiment of the present invention.

Fig. 35 is a sectional view which shows the SC structure of the Fourteenth Embodiment of the present invention.

Fig. 36 is an arrow view taken along the arrow of X1 to X1 shown in Fig. 35 or a front elevational view which shows the SC structure of the Fourteenth Embodiment of the present invention.

Fig. 37 is a sectional view which shows a modified example of the SC structure of the Fourteenth Embodiment of the present invention.

Fig. 38 is an arrow view taken along the arrow of X1 to X1 shown in Fig. 37 or a front elevational view which shows a modified example of the SC structure of the Fourteenth Embodiment of the present invention.

Fig. 39 is a drawing which describes a difference in attachment position of an accessory.

Fig. 40 is a sectional view which shows an SC structure of the Fifteenth Embodiment or Sixteenth Embodiment of the present invention.

Fig. 41 is a drawing which shows studs used in the SC structure of Fifteenth Embodiment of the present invention.

Fig. 42 is a drawing which shows one example of an AR machine used in constructing a stud used in the SC structure of Fifteenth Embodiment of the present invention.

Fig. 43 is a drawing which shows one example of procedures in which the stud used in the SC structure of the Fifteenth Embodiment of the present invention is constructed by using an AR machine.

Fig. 44 is a drawing which shows a stud used in the SC structure of a Sixteenth Embodiment of the present invention.

Fig. 45 is a drawing which shows a modified example of the SC structure (stud) of the Fifteenth Embodiment or Sixteenth Embodiment of the present invention.

Description of Embodiments

Hereinafter, a description will be given of individual embodiments of the accessory attachment structure of the present invention by referring to drawings.

First, a description will be given of an accessory and an SC structure (steel plate-reinforced concrete structure) to which the accessory is attached, prior to a description of an accessory attachment structure.

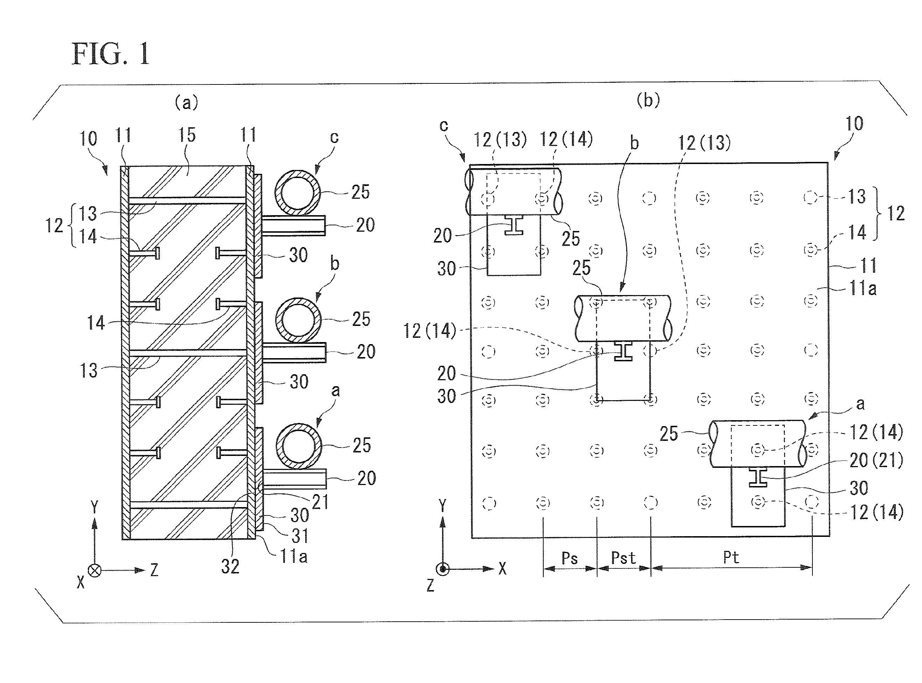

As shown in Fig. 1, the accessory is, for example, a piping support 20. This piping support 20 is formed with one H-steel member. The H-steel member is available in size, for example, 100 (H) x 100 (B). In the present invention, the accessory is not necessarily a piping support and fundamentally includes anything such as a support of ducts and a rack.

As shown in Fig. 1, an SC structure 10 is provided with a plurality of outside steel plates 11 which forms a steel plate frame, a plurality of bars 12 disposed into the steel plate frame and fixed to the steel plate frame, and concrete 15 installed inside the steel plate frame. The bar 12 includes a tie bar 13 for connecting a pair of outside steel plates 11 which are opposed to each other in a plurality of outside steel plates 11 which form the steel plate frame and a stud 14 for increasing connection of the outside steel plate 11 with the concrete 15. The tie bar 13 is provided such that one end thereof is joined to one outside steel plate 11 of the pair of outside steel plates 11 and the other end thereof is joined to the other outside steel plate 11. Further, only one end of the stud 14 is fixed to the outside steel plate 11.

Here, for convenience of the following description, of the pair of outside steel plates 11, a direction from the one outside steel plate 11 to the other outside steel plate 11 is given as the Z direction, a direction perpendicular to the Z direction is given as the Y direction, a direction perpendicular to the Z direction and the Y direction is given as the X direction. The pair of outside steel plates 11 are parallel to an XY plane.

In the SC structure 10, a mutual interval Ps between two studs 14 adj acent both in the X direction and the Y direction is, for example, 200 mm. A mutual interval Pt between two tie bars 13 adjacent both in the X direction and the Y direction is, for example, 600 mm. A mutual interval Pst between the stud 14 and the tie bar 13 adjacent both in the X direction and the Y direction is, for example, 200 mm. That is, in this SC structure 10, a mutual interval P between the bars 12 in the X direction and the Y direction is 200 mm.

[First Embodiment]

Next, a description will be given of an accessory attachment structure of a First Embodiment of the present invention by referring to Fig. 1.

An attachment plate 30 is usedwhen the piping support 20, which is an accessory, is attached to the surface of an SC structure 10, that is, an outer face 11a of an outside steel plate 11. The attachment plate 30 is formed, for example, with a single steel plate such as an SS (steel structure) material and an SM (steel marine) material.

The attachment plate 30 is a rectangular-shaped plate, that is, 200 mm in length of the transverse direction that is equal to a mutual interval between studs and 400 mm in length of the longitudinal direction that is twice as long as the mutual interval between studs. The attachment plate 30 is such that, with the longitudinal direction kept in alignment with the Y direction, one face thereof (hereinafter, referred to as steel plate joint face 32) is attached to the outer face 11a of the outside steel plate 11 of the SC structure 10. Further, the piping support 20, which is an accessory, is attached to the other face of the attachment plate 30 (hereinafter, referred to as accessory joint face 31).

On attachment of the piping support 20, first, the attachment plate 30 is joined to the piping support 20 by welding. Specifically, the accessory joint face 31 of the attachment plate 30 is allowed to come into contact with an attachment face 21 which is a face on the attachment plate 30 of the piping support 20, by which a border portion between these faces 31 and 21 is joined together by welding. Connection of the attachment plate 30 with the piping support 20 may include any form of connection such as connection by welding, soldering and connecting fittings such as screws. As described previously, the piping support 20 is an H-steel member of 100 (H) x 100 (B) mm, while the attachment plate 30 is a single steel plate (400 x 200 mm). Thus, there is no chance that the attachment face 21 of the piping support 20 will run off from the accessory joint face 31 of the attachment plate 30.

Next, the attachment plate 30 to which the piping support 20 has been joined is joined to the outside steel plate 11 of the SC structure 10 by welding. In this case, the attachment plate 30 is disposed on the outside steel plate 11 of the SC structure 10 in such a manner that the piping support 20 which has been joined to the attachment plate 30 assumes an intended position on an XY plane by making the longitudinal direction of the attachment plate 30 in alignment with the Y direction. Next, in a state that the steel plate joint face 32 of the attachment plate 30 is in contact with the outer face 11a of the outside steel plate 11, an outer-circumference edge of the steel plate joint face 32 of the attachment plate 30 is joined to the outside steel plate 11 by welding. In addition, connection of the attachment plate 30 with the outside steel plate 11 may be carried out by welding or soldering.

The attachment plate 30 is a steel plate with sizes 400 mm x 200 mm and a maximum length thereof (400 mm) is twice as long as a mutual interval P (200 mm) of bars 12 of the SC structure 10. Therefore, if the attachment plate 30 is attached to any position on the outer face 11a of the outside steel plate 11, at least two bars 12 are present in a region where the attachment plate 30 has been attached.

The piping support 20 is attached, for example, at the center of the attachment plate 30 (at the center in the X direction and the Y direction). As shown in the case of a in Fig. 1(b), where the piping support 20 is positioned in the X direction on a line of a certain bar 12 and positioned in the Y direction at the center of two bars 12 adjacent in the Y direction, two bars 12 are present in a region in the X direction and the Y direction where the attachment plate 30 of the piping support 20 has been attached.

Further, as shown in the case of b in Fig. 1(b), where the piping support 20 is positioned in the X direction at the center of two bars 12 adjacent in the X direction and positioned in the Y direction on a line of a certain bar 12, six bars 12 are present in a region in the X direction and the Y direction where the attachment plate 30 of the piping support 20 has been attached.

Still further, as shown in the case of c in Fig. 1(b), where the piping support 20 is positioned in the X direction at the center of two bars 12 adjacent in the X direction and positioned in the Y direction at the center of two bars 12 adj acent in the Y direction, four bars 12 are present in a region in the X direction and the Y direction where the attachment plate 30 of the piping support 20 has been attached.

That is, in the present embodiment, even where the attachment plate 30 is attached to any position of the outside steel plate 11, at least two bars 12 are present in a region of the attachment plate 30 in the X direction and the Y direction. Therefore, in the present embodiment, where the piping support 20 is disposed at any position on the outside steel plate 11, it is possible to receive tension load, etc., from the piping support 20 by two or more bars 12. In other words, it is possible to reduce a load received by each one of the bars 12.

Therefore, in the present embodiment, the piping support 20 can be attached to any given position, even where the SC structure 10 receives a relatively great load from the piping support 20.

[Second Embodiment]

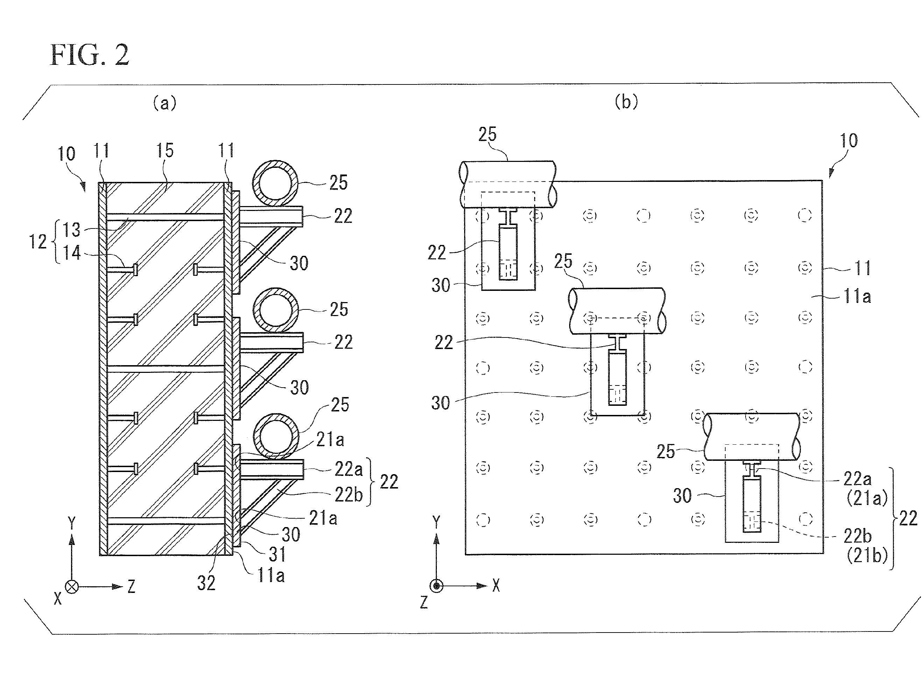

Next, a description will be given of a Second Embodiment of an accessory attachment structure of the present invention by referring to Fig. 2.

The attachment structure of the First Embodiment is an attachment structure which is the piping support 20 with one leg. The attachment structure of the present embodiment is an attachment structure which is a piping support 22 with a plurality of legs.

Specifically, the piping support 22 of the present embodiment is provided with a beam 22a which directly supports a piping 25 and a reinforcing member 22b which supports the beam 22a. The beam 22a is installed so as to run along the Z direction. The reinforcing member 22b is joined to one end of the beam 22a and installed obliquely relative to the beam 22a from there, that is, so as to run along the YZ directions. The beam 22a and the reinforcing member 22b constitute respectively the legs of the piping support 22. Therefore, the attachment face which is a face on the attachment plate 30 of the piping support 22 is given as a face 21a at the other end of the beam 22a and also a face 21b at the other end of the reinforcing member 22b.

The attachment plate 30 of the present embodiment is made to a size such that on attachment of the piping support 22, these two attachment faces 21a, 21b of the piping support 22 are both placed inside an accessory joint face 31 of the attachment plate 30, specifically, the sizes of 400 mm x 200 mm. The attachment plate 30 of the present embodiment is equal in sizes (400 mm x 200 mm) to the attachment plate 30 of the First Embodiment to which the piping support 20 with one leg is attached. However, where a distance between the respective attachment faces 21a and 21b of the beam 22a and the reinforcing member 22b which constitute the piping support 22 is relatively great, it is necessary to make the attachment plate 30 greater in sizes so that the two attachment faces 21a and 21b are both placed inside the accessory joint face 31 of the attachment plate 30.

As described so far, in the present embodiment as well, as with the First Embodiment, the attachment plate 30 is a steel plate with sizes of 400 mm x 200 mm and a maximum length (400 mm) is twice as long as a mutual interval (200 mm) between bars 12 of the SC structure 10. It is therefore possible to attach the piping support 22 to any given position even where a load of the piping support 22 received by the SC structure 10 is relatively great.

[Third Embodiment]

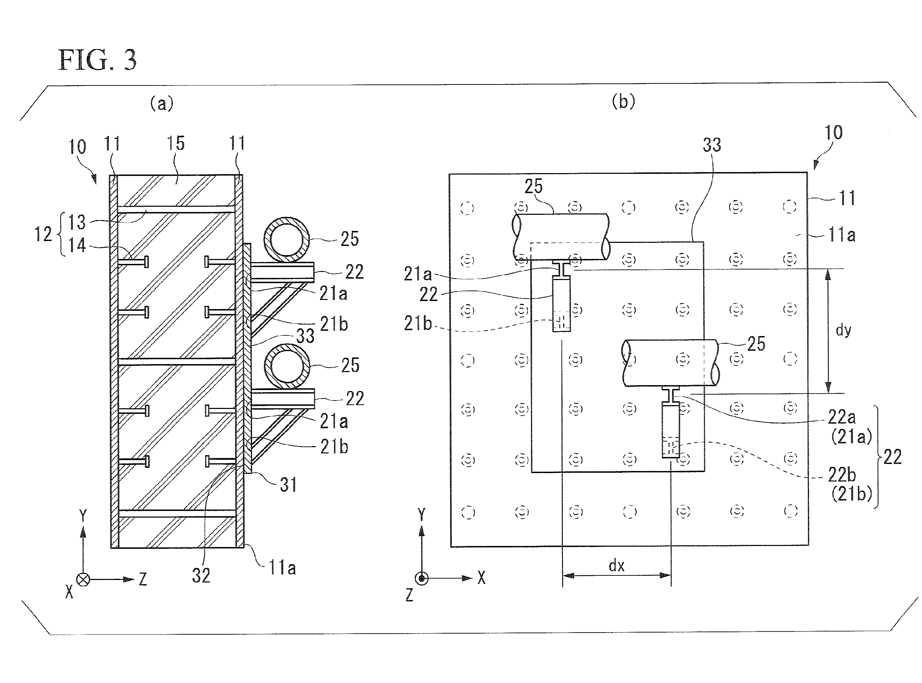

Next, a description will be given of a Third Embodiment of an accessory attachment structure of the present invention by referring to Fig. 3.

The present embodiment relates to a plurality of accessory attachment structures, and the plurality of accessories are all piping supports 22 as with the Second Embodiment.

Two piping supports 22 are attached to an attachment plate 33 of the present embodiment. A mutual interval dy in the Y direction between an attachment face 21a of a beam 22a of one piping support 22 and an attachment face 21a of the other piping support 22 is 450 mm, and a mutual interval dx in the X direction is 400 mm. Therefore, the attachment plate 33 of the present embodiment is made to a size such that on attachment of these two piping supports 22, the attachment faces 21a, 21b of every two piping supports 22 are both placed inside an accessory joint face 31 of the attachment plate 33, specifically, the sizes of 900 mm x 650 mm.

As described so far, in the present embodiment, a steel plate joint face 32 (900 mm x 650 mm) of the attachment plate 33 to which two piping supports 22 are attached is at least two times greater in area than a steel plate joint face 32 (400 mm x 200 mm) of the attachment plate 30 to which one piping support 22 is attached. That is, the steel plate joint face 32 is greater in area than a case where one piping support 22 is attached. It is therefore possible to increase a load of the piping support 22 received by an SC structure 10. Further, in the present embodiment, two piping supports 22 can be attached to the SC structure 10 by using one attachment plate 33 on attachment of two piping supports 22, thus making it possible to reduce man-hours necessary for attachment work.

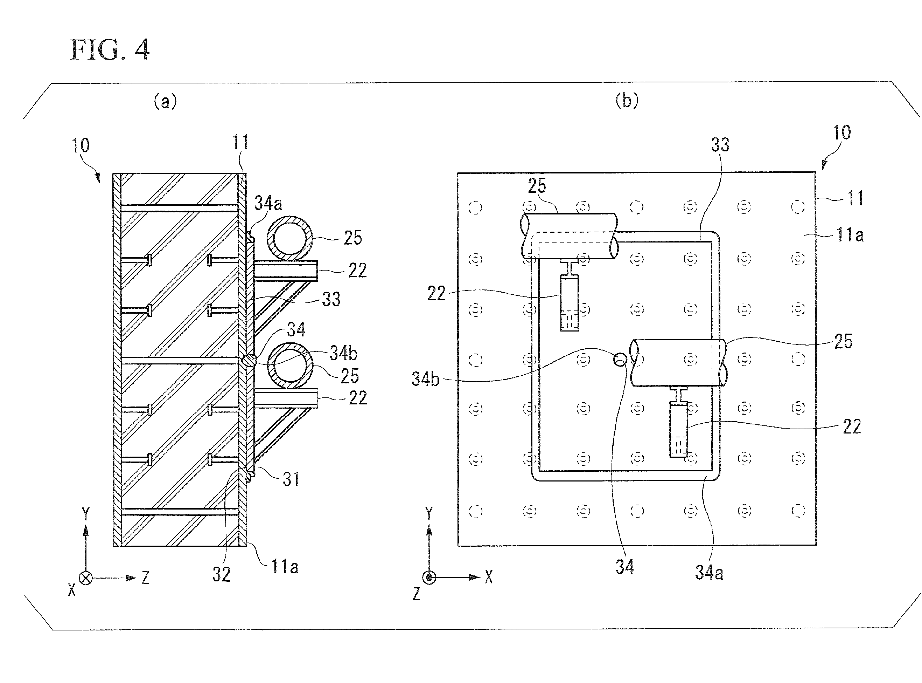

Incidentally, in the present embodiment, connection of the attachment plate 33 with the outside steel plate 11 is made, as with the embodiments so far described, by joining an outer-circumference edge of the steel plate joint face 32 of the attachment plate 33 to the outside steel plate 11 by welding. However, where the attachment plate 33 is relatively great in size as found in the present embodiment, it is preferable that, as shown in Fig. 4, the outer-circumference edge of the steel plate joint face 32 of the attachment plate 33 be joined to the outside steel plate 11 and also the steel plate joint face 32 of the attachment plate 33 be joined at several spots thereinside to the outside steel plate 11 by welding. In this case, it is acceptable that a through-hole 34 be formed in advance inside the attachment plate 33, and this through-hole 34 be used as a welding groove to weld the outside steel plate 11 to a part of the through-hole 34 of the attachment plate 33 (welded part 34b) and also the outer-circumference edge of the steel plate joint face 32 of the attachment plate 33 be welded to the outside steel plate 11 (welded part 34a). It is also acceptable that after the outer-circumference edge of the steel plate joint face 32 of the attachment plate 33 is welded to the outside steel plate 11, a through-hole 34 be formed inside the attachment plate 33 and the through-hole 34 be used as a welding groove to weld the outside steel plate 11 to a part of the through-hole 34 of the attachment plate 33.

Next, a description will be given of various modified examples of the embodiments so far described.

[First Modified Example]

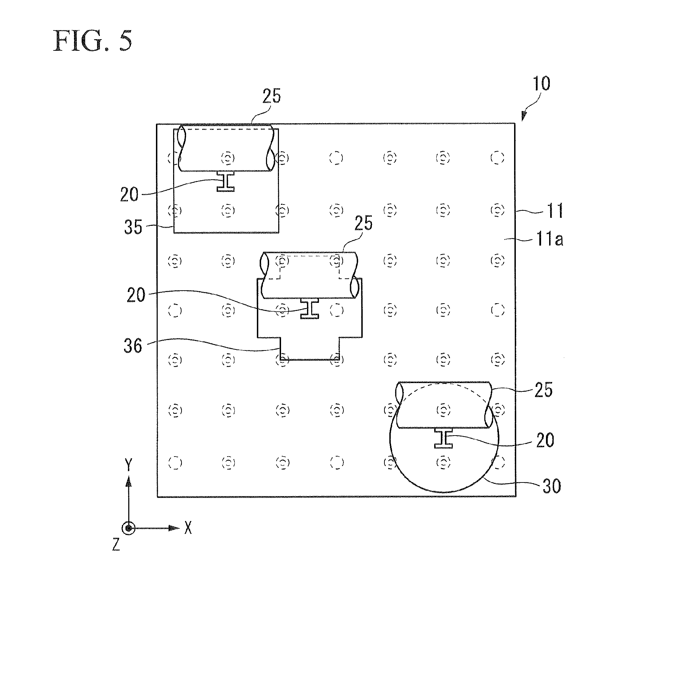

The attachment plates 30, 33 of the so far-described individual embodiments are both formed in a rectangular shape steel plate, to which the present invention shall not be, however, restricted and is fundamentally applicable to any shape. For example, as shown in Fig. 5, the attachment plate may be a regular tetragonal steel plate 35, a cross-shaped steel plate 36 or a circular steel plate 37.

[Second modified example]

In the so far-described individual embodiments, the accessory joint face 31 of the attachment plates 30, 33 is equal in area to the steel plate j oint face 32. However, the attachment plate of the present invention may be made to a size such that an attachment face of a piping support as a whole can be placed inside the accessory joint face and the length of the steel plate joint face in any of the directions along the steel plate joint face is at least two times greater than a mutual interval between bars 12. Therefore, the accessory joint face may be smaller in area than the steel plate joint face.

For example, as shown in Fig. 5, a cross-sectional shape perpendicular to the X direction of the attachment plate 38 and a cross-sectional shape perpendicular to the Y direction may be formed in the shape of an isosceles trapezoid. In this case, it is acceptable that a face corresponding to an upper bottom of the isosceles trapezoid be given as an accessory joint face 31 and a face corresponding to a lower bottom of the isosceles trapezoid be given as a steel plate joint face 32.

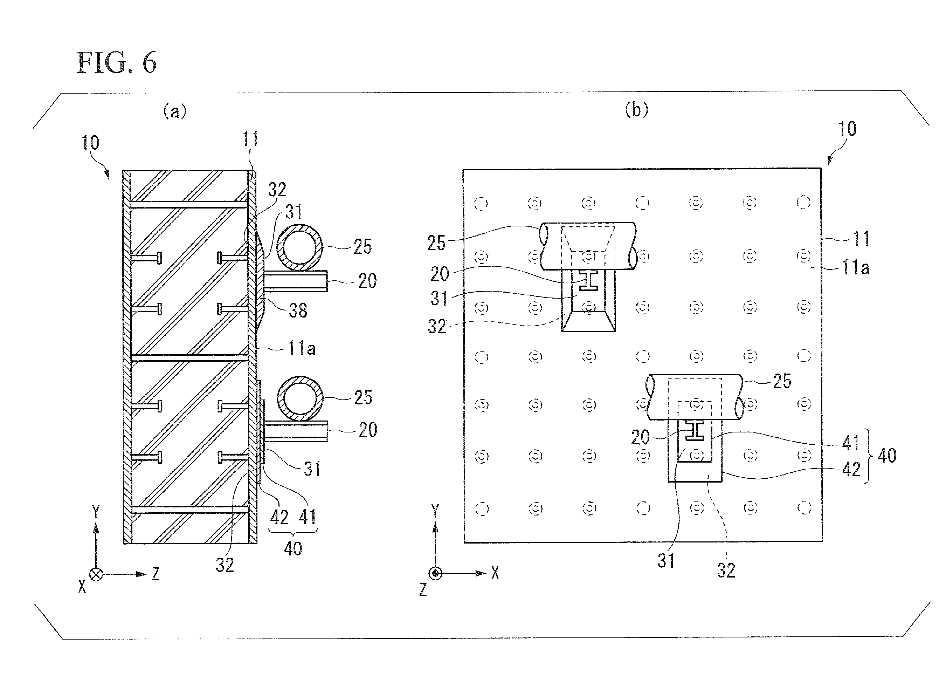

Further, as shown in Fig. 6, an attachment plate 40 may be formed with a plurality of steel plates 41, 42 which are stacked in the Z direction and joined together. In this case, it is acceptable that the steel plate 41 on the side of an accessory be made smaller than the steel plate 42 on the side of an outside steel plate 11. It is also acceptable that in the plurality of steel plates 41, 42, a face on the side of the outside steel plate 11 of the steel plate 42 which is closest to the outside steel plate 11 be given as the steel plate joint face 32 and the face of the steel plate 41 on the side of an accessory which is closest to the side of the accessory be given as the accessory joint face 31.

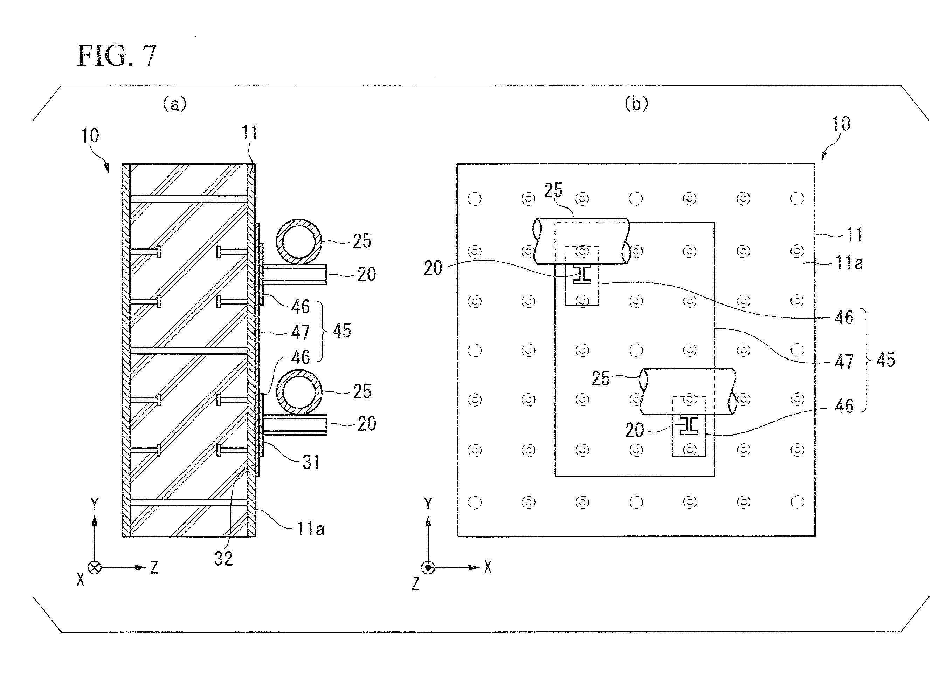

As shown in Fig. 7, it is acceptable that an attachment plate 45 which is formed by stacking a plurality of steel plates 46, 47 be used as an attachment plate for attaching a plurality of piping supports 20. In this case, in the plurality of steel plates 46, 47, the steel plate 46 which is closest to an accessory is installed for every plurality of piping support 20 and a face of each steel plate 46 on the side of the accessory is given as an accessory joint face 31, by which the piping support 20 is fixed to the accessory joint face 31 of each steel plate 46. Next, one steel plate 47 on which the piping supports 20 fixed to the individual steel plates 46 can be disposed at the respective intended positions in the X direction and the Y direction is given as a steel plate closest to the side of the outside steel plate. Next, the plurality of steel plates 46 are joined to the steel plate 47 on the side of the accessory, and a face of the steel plate 47 on the side of the outside steel plate is given as a steel plate joint face 32 and joined to the outside steel plate 11.

As described so far, when the accessory joint face 31 is made smaller in area than the steel plate joint face 32, the attachment plates 38, 40, 45 can be reduced in weight without decreasing a load of the piping support 20 received by the SC structure 10. Therefore, where the accessory joint face 31 is made smaller in area than the steel plate joint face, it is preferable that an interval between the accessory joint face 31 and the steel plate joint face 32 be kept to a greater extent than a predetermined extent for the purpose of ensuring the strength against the load of the piping support 20 received by the attachment plates 38, 40, 45.

[Other modified example]

In each of the so far-described embodiments and modified examples, a steel plate is used as the attachment plate, to which the present invention shall not be, however, restricted. Various types of plates such as a SUS plate may be used in the present invention.

Further, in these embodiments and modified examples, the piping support is joined to an attachment plate and the attachment plate is then joined to the outside steel plate 11. It is, however, acceptable that an attachment plate be joined to the outside steel plate 11 and the piping support be then joined to the attachment plate.

[Fourth Embodiment]

Hereinafter, a description will be given of an accessory attachment structure of a Fourth Embodiment in the present invention by referring to drawings.

Prior to a description of the accessory attachment structure, a description will be first given of an accessory and an SC structure (steel plate-reinforced concrete structure) 201 to which the accessory is attached.

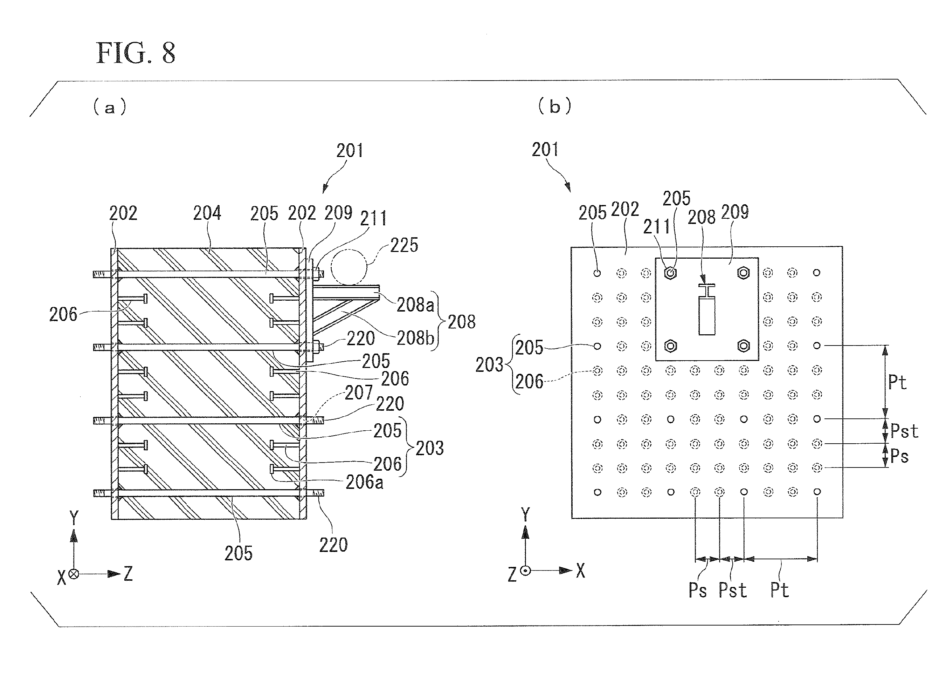

As shown in Fig. 8, the SC structure 201 is provided with two outside steel plates 202, a plurality of bars 203 and concrete 204. The outside steel plates 202 are opposed to each other to form a steel plate frame. The plurality of bars 203 are installed inside the steel plate frame and fixed to the steel plate frame. The concrete 204 is installed inside the steel plate frame. The bar 203 includes a tie bar 205 for connecting two outside steel plates 202 which form the steel plate frame and a stud 206 for steadily fixing the outside steel plate 202 to the concrete 204.

Here, as a matter of convenience in giving the following description, in a pair of outside steel plates 202, a right-hand direction in Fig. 8 (a) from one outside steel plate 202 to the other outside steel plate 202 is given as the Z direction, an upper direction in Fig. 8 perpendicular to the Z direction is given as the Y direction, and a backside direction on the page space of Fig. 8(a) perpendicular to the Z direction and the Y direction is given as the X direction. Further, the pair of outside steel plates 202 are parallel to an XY plane.

In the SC structure 201, a mutual interval Ps between two studs 206 adjacent both in the X direction and the Y direction is, for example, 200 mm. Further, a mutual interval Pt between two tie bars 205 adjacent both in the X direction and the Y direction is, for example, 600 mm. Still further, a mutual interval Pst between a stud 206 and a tie bar 205 adjacent both in the X direction and the Y direction is, for example, 200 mm. That is, in the SC structure 201, a mutual interval P between bars 203 in the X direction and the Y direction is 200 mm.

One end of each stud 206 is fixed to an inner face of the outside steel plate 202. The other end of each stud 206 is joined to a cylindrical head 206a so as to be steadily fixed to the concrete 204 in an improved manner.

Each tie bar 205 passes through the concrete 204 and the outside steel plate 202, and both ends thereof protrude from an outer face of the outside steel plate 202 by a predetermined length. That is, the tie bar 205 is longer than the thickness of the SC structure 201. The protruded length is decided depending on the thickness of an attachment plate 209 to be described later and the thickness of a nut 211 for fixing the attachment plate 209 and set so as to be at least longer than a sum of these thicknesses.

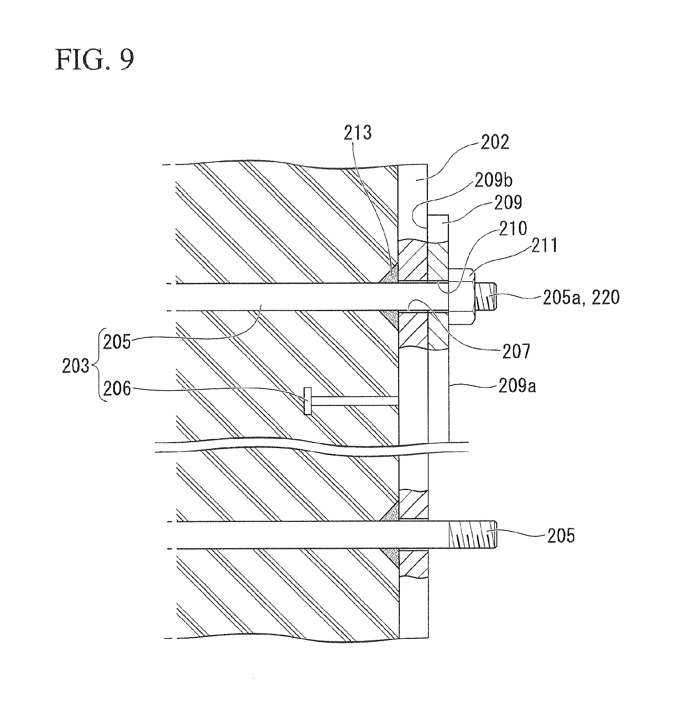

As shown in Fig. 9, a tie bar hole 207 for being passed through by the tie bar 205 is formed at a position corresponding to the tie bar 205 of the outside steel plate 202. The tie bar 205 is joined to the outside steel plate 202 by welding an inner face of the outside steel plate 202 to the tie bar 205. Thereby, an interval between the outside steel plates 202 is kept constant. A reference numeral 213 shown in Fig. 9 is a joint site.

An external thread portion 220 is formed on an outer circumference of a protrusion 205a at both ends of each tie bar 205. A pitch of the external thread portion 220 is in agreement with a pitch of the nut 211 to be described later.

Next, a description will be given of an attachment structure of a piping support 208 in association with the above-described SC structure 201.

The piping support 208 is formed with two H-steel members. The H-steel member has sizes of, for example, 100 mm (H) x 100 mm (B). In addition, in the present invention, an accessory is not necessarily a piping support and may include fundamentally anything such as a support of ducts and a rack.

The piping support 208 is attached to the outside steel plate 202 of the SC structure 201 via an attachment plate 209. The attachment plate 209 is formed, for example, with a single steel plate such as an SS (steel structure) material and an SM (steel marine) material.

The attachment plate 209 is a rectangular plate-like member when viewed from above. One side of the attachment plate 209 is, for example, 280 mm in length. An attachment hole 210 is formed at each of the four corners of the attachment plate 209. The attachment holes 210 are passed by each of four protrusions 205a which are positioned so as to correspond thereto.

The piping support 208, which is an accessory, is attached to the surface of the attachment plate 209 (hereinafter, referred to as accessory joint face 209a). The piping support 208 is provided with a beam 208a which directly supports a piping 225 and a reinforcing member 208b which reinforces the beam 208a. The beam 208a is joined, for example, by welding in such a manner that the longitudinal direction thereof is orthogonal to the accessory joint face 209a of the attachment plate 209. In addition, the beam 208a is joined to the accessory joint face 209a in such a manner that flanges (edges) of the beam 208a are positioned above and below. The reinforcing member 208b is joined so as to extend obliquely downward from a free-end lower face of the beam 208a joined to the attachment plate 209 toward the accessory joint face 209a of the attachment plate. Further, connection of the attachment plate 209 with the piping support 208 may be made in any form, for example, by welding, soldering or using connecting fittings such as screws.

The attachment plate 209 to which the piping support 208 is joined is attached by inserting the protrusions 205a of the tie bars 205 respectively into the four attachment holes 210. Thereby, a back face of the attachment plate 209 (hereinafter, referred to as a steel plate joint face 9b) is allowed to come into contact with the outer face of the outside steel plate 202 of the SC structure 201. Further, a nut 211 is fastened to an external thread portion of the protrusion 205, by which the attachment plate 209 is fixed.

In the above embodiment, an end of the tie bar 205 is exposed, and an external thread portion 220 which is screwed into a nut is formed at this end. Therefore, it is possible to attach the attachment plate 209 to any given tie bar 205 after visual observation is made for a site at which the tie bar 205 is installed. Further, in terms of structure, the attachment plate 209 is directly fixed to the tie bar 205. Therefore, stress resulting from a load of the piping support 208 is allowed to act on four tie bars 205 via the attachment plate 209. It is thereby possible to reduce a load received by each one of the tie bars 205.

Still further, the tie bar 205 protrudes from the outer face of the outside steel plate 202. Therefore, in a step of fixing the attachment plate 209 to the SC structure 201, an attachment plate 1 may be hooked to the protrusion 205a and retained temporarily. Thereby, fixing work is done more easily.

In the present embodiment, the attachment plate 209 can be attached to both sides of the SC structure 201, to which the present invention shall not be, however, restricted. The attachment plate 209 may be attached to only one side of the SC structure 201.

[Fifth Embodiment]

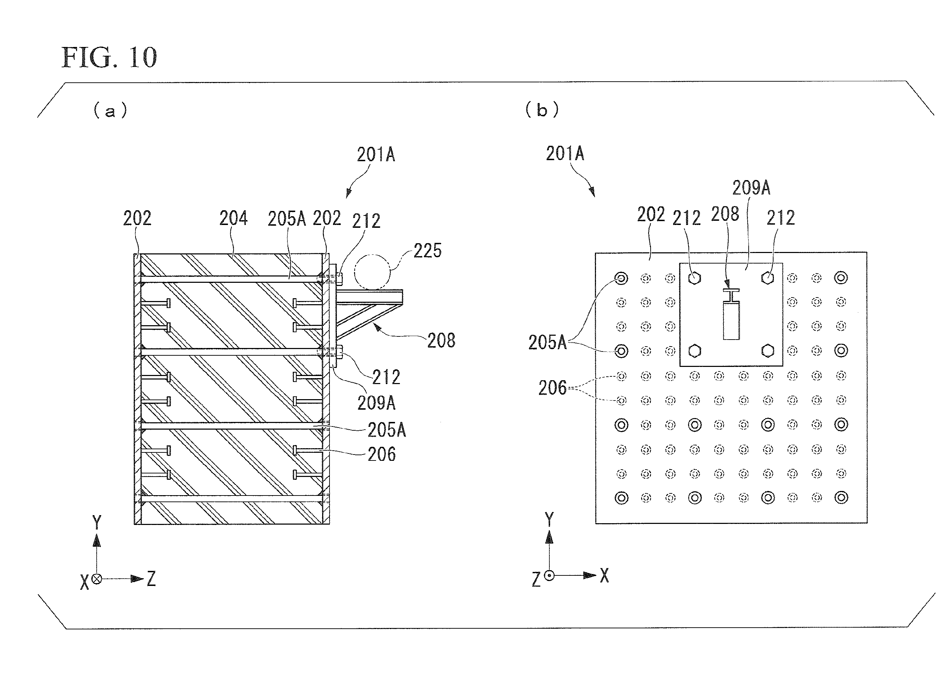

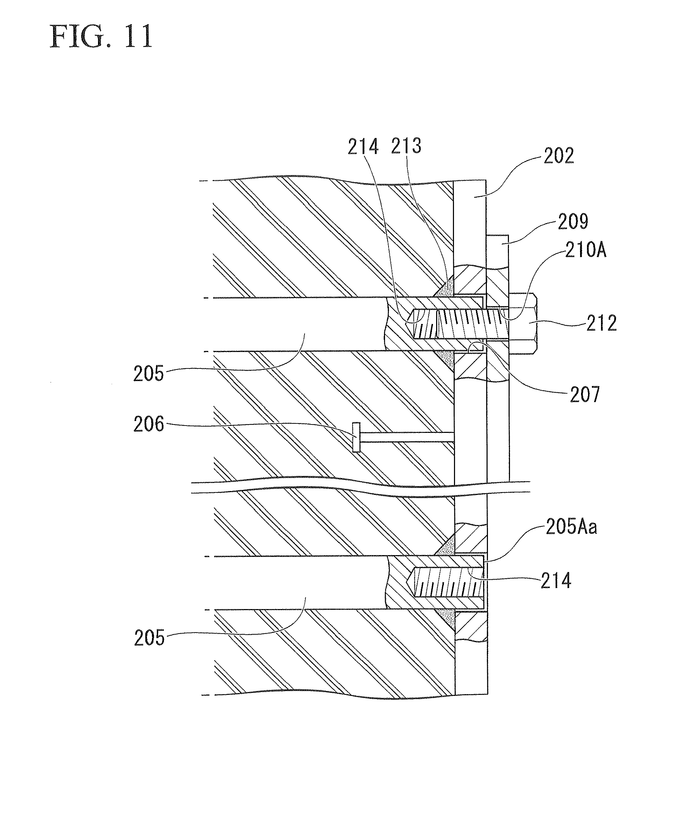

Next, a description will be given of an accessory attachment structure of a Fifth Embodiment of the present invention by referring to Fig. 10 and Fig. 11. The accessory attachment structure of the Fifth Embodiment is provided such that the tie bar 205 of the above-described accessory attachment structure of the Fourth Embodiment is changed in structure.

As shown in Fig. 11, in a tie bar 205A of the Fifth Embodiment, an end face 205Aa is exposed from an outer face of an outside steel plate 202. In the present embodiment, the end face 205Aa is substantially flush with the outer face of the outside steel plate 202. That is, the tie bar 205A has a length which is substantially equal to the thickness of an SC structure 201A. An internal thread hole 214 corresponding to a bolt 212 to be described later is formed on the end face 205Aa of the tie bar 205A.

As for the tie bar 205A and outside steel plate 202, the tie bar 205A is inserted into a tie bar hole 207 in such a manner that the end face 205Aa of the tie bar 205A is disposed to be substantially flush with the outer face of the outside steel plate 202, and an inner face of the outside steel plate 202 is welded to an outer circumferential face of the tie bar 205A to fix them. Thereby, the internal thread hole 214 formed at the end face 205Aa of the tie bar 205A is fixed in a state of being exposed on the outer face of the outside steel plate 202.

An attachment hole 210A of an attachment plate 209A to which a piping support 208 is attached has an inner diameter which allows the bolt 212 to pass therethrough. The attachment hole 210A is, as with the Fourth Embodiment, formed at a position corresponding to each of the four tie bars adjacent to each other. The attachment plate 209A is fixed to an SC structure 210A by screwing four bolts 212 into the internal thread holes 214 and fastening the bolts.

In the above-described embodiment, the end 205Aa of the tie bar 205A is exposed on the outer face of the outside steel plate 202 and the internal thread hole 214 which is screwed with the bolt 212 is formed at the end 205Aa. It is therefore possible to attach the attachment plate 209A to any given tie bar 205A after a site at which the tie bar 205A is installed is visually observed.

Further, in terms of the structure, the attachment plate 209A is directly attached to the tie bar 205A. Therefore, stress derived from a load of the piping support 208 is allowed to act on the four tie bars 205A via the attachment plate 209A. Still further, the tie bar 205A does not protrude on the outside steel plate 202. As a result, where the attachment plate 209A is not fixed, the SC structure 201A has a smoother exposed face.

Further, in the present embodiment, the end face 205Aa is substantially flush with the outer face of the outside steel plate 202, to which the present invention shall not be, however, restricted. The end face 205Aa may be positioned inside the outer face of the outside steel plate 202. Further, a hole may only be formed which can place a protruded part of the tie bar on the attachment plate 209A, even if the end face 205Aa is positioned outside the outer face of the outside steel plate 202.

[Sixth Embodiment]

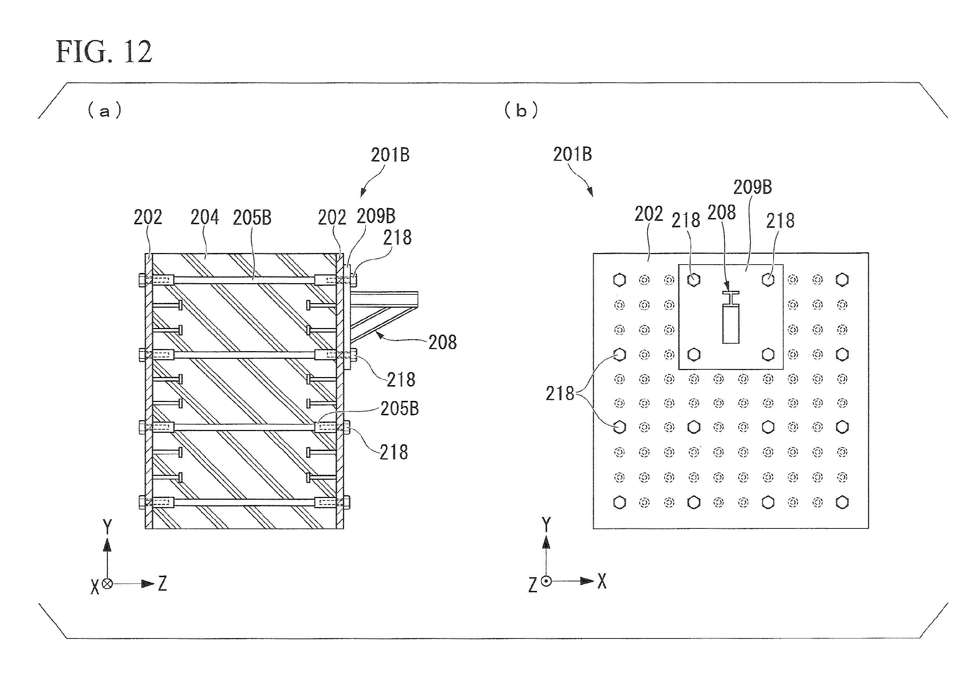

Next, a description will be given of an accessory attachment structure of a Sixth Embodiment of the present invention by referring to Fig. 12, Fig. 13 and Fig. 14.

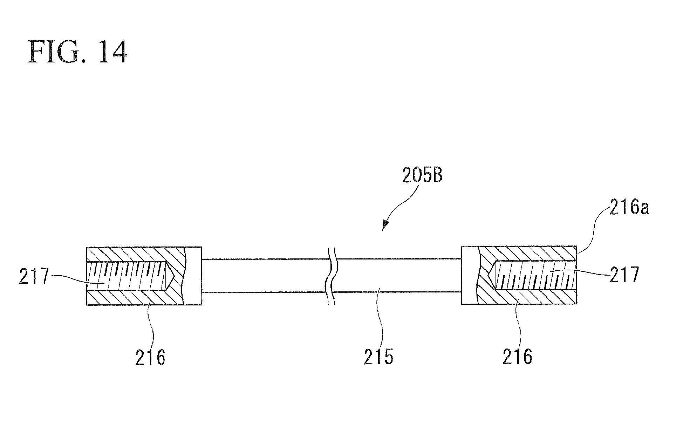

As shown in Fig. 14, a tie bar 205B of the present embodiment is constituted with a tie bar main body 215 and a pair of tie bar-fixing portions 216 which are joined to both ends of the tie bar main body 215. The tie bar main body 215 is, for example, a 36-mm-across steel rod. The tie bar-fixing portion 216 is, for example, a 45-mm-across steel rod and integrally welded so as to be coaxial with both ends of the tie bar main body 215.

The integrally formed tie bar 205B has a length which is substantially equal to the thickness of an SC structure 201B.

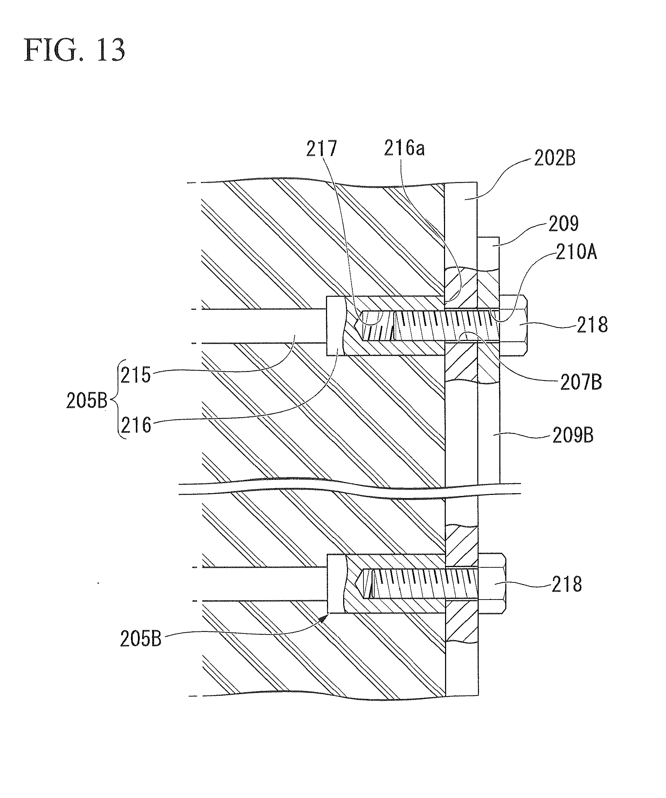

As shown in Fig. 13, each of the tie bar-fixing portions 216 is formed so as to have an outer diameter greater than a tie bar hole 207B of an outside steel plate 202B. An internal thread hole 217 corresponding to a bolt 218 to be described later is formed at an end face 216a of the tie bar-fixing portion 216.
The tie bar 205B is fixed to the outside steel plate 202 by screwing the bolt 218 into the internal thread hole 217 of the tie bar-fixing portion 216 in a state that the end face 216a of the tie bar-fixing portion 216 is allowed to come into contact with an inner face of an outside steel plate 202B. That is, unlike the accessory attachment structure of the Fourth Embodiment or Fifth Embodiment, the tie bar 205B is not welded to the outside steel plate 202. Thereby, the internal thread hole 217 formed at the end face 216a of the tie bar-fixing portion 216 is exposed on an outer face of the outside steel plate 202B via the tie bar hole 207B.

On attachment of the attachment plate 209B to the outside steel plate 202B, the bolt 218 which fixes the tie bar 205B corresponding to a position at which the attachment plate 209B is attached is temporarily removed. And, the attachment plate 209B is disposed on the outside steel plate 202 and again fastened and fixed by means of the bolt 218. That is, the attachment plate 209B is placed between the outside steel plate 202 and the bolt 218 and then fixed.

In the above-described embodiment, with regard to the tie bar 205B, the outside steel plate 202 and the attachment plate 209B, the bolt 218 is screwed into the internal thread hole 217 of the tie bar 205B to fasten the outside steel plate 202 or fasten the outside steel plate 202 with the attachment plate 209B. This will eliminate the need for a welding process, by which an SC structure can be constructed more easily. Further, concrete 204 different in thickness can be handled freely only by changing the length of the tie bar main body 215 of the tie bar 205B.

Further, in this embodiment, a description has been given of a case where the bolt 218 is used to fasten and fix the outside steel plate 202 and the attachment plate 209B. However, in place of forming the internal thread hole 217 at the tie bar-fixing portion 216, a method may be used in which a pilot hole of a tapping bolt is provided to fasten and fix them by means of the tapping bolt. This method is applied to at least one side of the tie bar-fixing portion, which will not affect the positional accuracy or others of the tie bar hole 207B of the outside steel plate 202.
Further, the tie bar main body 215 may be integrally formed with the tie bar-fixing portion 216.

[Seventh Embodiment]

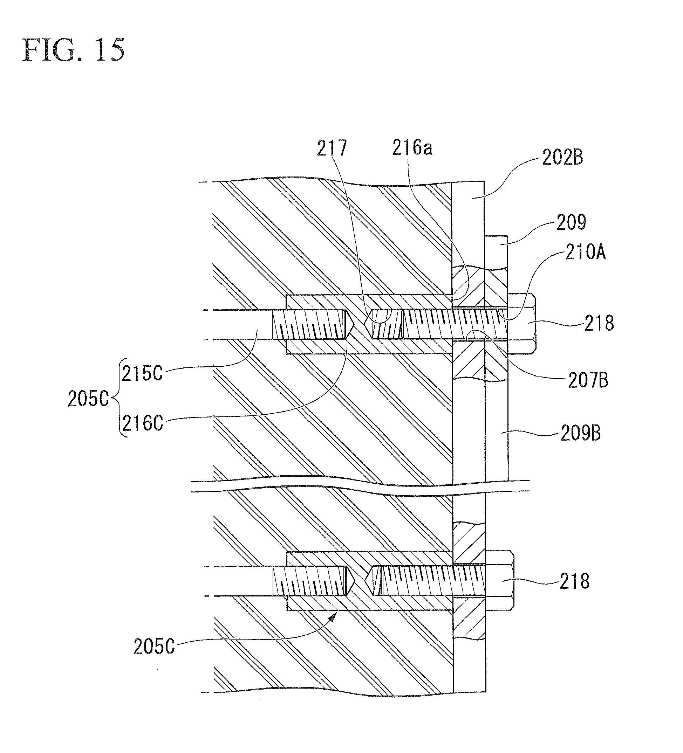

Next, a description will be given of the Seventh Embodiment of the invention by referring to Fig. 15.
This embodiment is similar to the Sixth Embodiment in basic structure in which the tie bar is fastened and fixed to the outside steel plate 202 and the attachment plate 209 by using the bolt 218. Therefore, in the following description, the same reference numerals are given to the same parts, with a description thereof omitted. Further, although Fig. 15 shows only one end of a tie bar 205C, both ends of the tie bar 205C are identical in shape.
The tie bar 205C of the present embodiment is constituted with a tie bar main body 215C and a pair of tie bar-fixing portions 216C, 216C which are screwed into the both ends of the tie bar main body 215C. An external thread is formed at both ends of the tie bar main body 215C. An internal thread hole corresponding to the external thread of the tie bar main body 215C is formed at each of the tie bar-fixing portions 216. They are screwed thereinto to give an integrally formed tie bar 205C.

According to the above-described embodiment, the tie bar 205C is integrally formed by screwing the tie bar main body 215C into the tie bar-fixing portion 216. This will eliminate the need for a process such as welding, thus making it possible to change the length of the tie bar main body 215C more easily.

Next, a description will be given of modified examples of the Fourth Embodiment to Seventh Embodiment so far described.

[Modified examples]

In the individual embodiments so far described, a description has been given of a case where the correspondingly-shaped attachment plates 209, 209A and 209B are attached to the mutually-adjacent four tie bars 205, 205A and 205B. The present invention shall not be, however, restricted thereto. The attachment plate may be changed in size according to the size and others of an accessory. In addition to a regular tetragonal attachment plate, a rectangular attachment plate may be attached to each of the six tie bars 205 made up of two upper and lower stages, each containing three tie bars. Alternatively, a rectangular attachment plate with two attachment holes may be attached to two tie bars 205 which are mutually adjacent.

In addition, in the embodiments and modified examples so far described, after the piping support 208 is joined to the attachment plate 209, the attachment plate is joined to the outside steel plate 202. However, after the attachment plate 209 is joined to the outside steel plate 202, the piping support 208 may be joined to the attachment plate 209.

[Eighth Embodiment]

Hereinafter, a description will be given of an accessory attachment structure of an Eighth Embodiment of the present invention by referring to drawings.

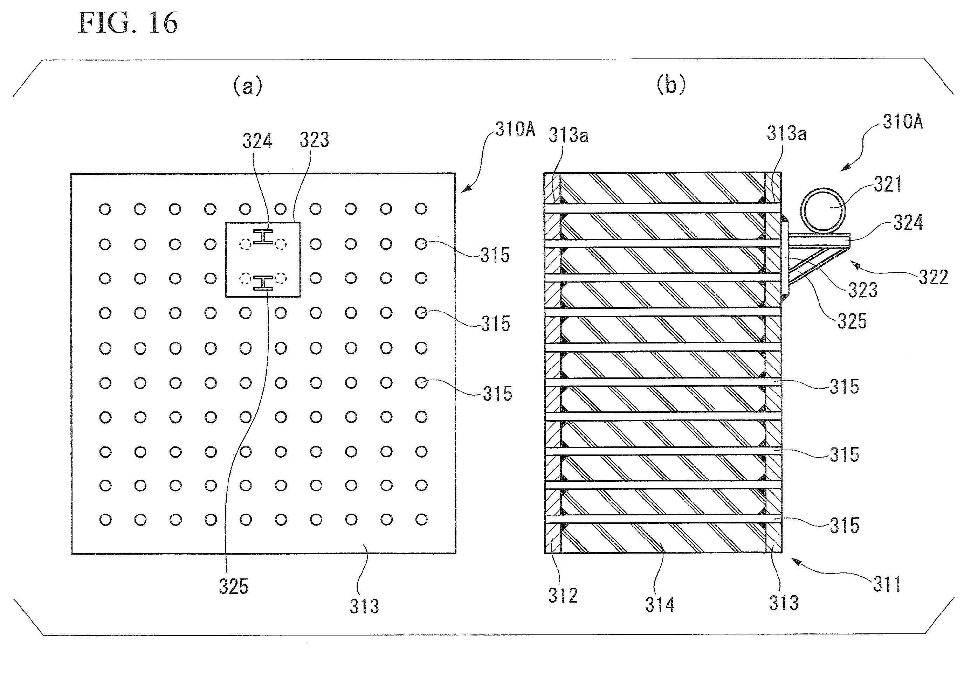

As shown in Fig. 16, an accessory attachment structure 310A of the Eighth Embodiment is provided such that an attachment plate 323 of a support member 322 which supports a duct 321 (long object) is attached to an SC structure (steel plate-reinforced concrete structure) 311.

The SC structure 311 is provided such that concrete 314 is installed between a pair of outside steel plates 312, 313 which are opposed to each other at a certain interval. Further, the pair of outside steel plates 312, 313 are connected by means of a tie bar 315, both ends of which are fixed by welding to an inner face of each of the outside steel plates 312, 313.

The tie bar 315 connects the outside steel plates 312, 313, thereby keeping an interval thereof constant, irrespective of the load received from the concrete 314. The tie bars 315 are disposed vertically and transversely on the outside steel plates 312, 313, with a constant interval kept. In the present embodiment, as shown in Fig. 16, a total of 100 tie bars 315 consisting of 10 columns in the longitudinal direction and 10 rows in the transverse direction are disposed individually so as to extend in amanner substantially orthogonal to the outside steel plates 312, 313. Further, the tie bars 315 used here are identical in diameter and strength. The outside steel plates 312, 313 are connected with the tie bars 315 by stud welding or the like.

For example, plug welding is done to fix a head of the tie bar 315 to the outside steel plate 313. Specifically, after the headed tie bar 315 is melted and settled on one outside steel plate 312 by stud welding, the other outside steel plate 313 on which a hole 313a for plug welding has been formed in advance is placed on the headed tie bar 315 and a leading end of a stud as a welding material is fused by arc stud welding to fill the hole 313a. There is no particular restriction on a method for connecting the tie bars 315. Any method will do as long as the head of the tie bar 315 is visible (does not protrude) at least on the surface of the outside steel plate 313 to which the support member 322 is attached.

On construction of the SC structure 311, as shown in Fig. 16, the pair of outside steel plates 312, 313 are disposed so as to be opposed to each other, and both ends of each tie bar 315 are welded and fixed to the inner faces thereof. Such precast structures are produced in a large number, transported to a construction site and connected vertically and transversely.

Next, the concrete 314 is installed between the outside steel plates 312, 313 and the concrete 314 is hardened to complete the SC structure 311. In addition, the SC structure 311 is constructed mainly as an external wall, a partition wall, a floor slab (foundation slab) and the like of a building. In general, subsequently attached members such as long objects including various types of machines in a building (hereinafter, a description will be given by referring to a duct 321) are installed in a state of being supported by support members (accessories) 322.

An attachment plate 323 is attached to the surface of each of the outside steel plates 312, 313 in a region, the back side of which is provided at least with a plurality of tie bars 315. Here, the tie bars 315 are disposed vertically and transversely at constant intervals in a state that a leading end of each tie bar 315 is exposed on the surface of the outside steel plate 313. Further, where the attachment plate 323 is mounted on a plurality of tie bars 315, the tie bars 315 can be fixed by welding at positions where the load is taken into account.

The duct 321 is placed for the purpose of evacuation of air at a control room of plant facilities or the like. The duct 321 is extended along the surface of the outside steel plate 313 in a state of being supported by support members 322. The duct 321 is a round duct, the cross-section of which is circular, and used is a cylindrical duct made with a relatively thin steel plate. There is no restriction on types of long objects, including, for example, a rectangular duct.

The support member 322 is made with an H-steel member and fixed to the SC structure 311 via the attachment plate 323. Specifically, the support member 322 is composed of a beam 324 for supporting the duct 321 and a reinforcing member 325 for supporting the beam 324. The support member 322 may include an L-steel member and a channel bar in addition to the H-steel member.

The attachment plate 323 is a steel plate, the shape of which is rectangular, when viewed from above. The attachment plate 323 is provided such that each side thereof is fixed to the surface of the outside steel plate 313 by welding. The attachment plate 323 is attached to a region where at least a plurality of tie bars 315 is attached. That is, the attachment plate 323 is attached to a region, the back side of outside steel plate 313 is provided with a plurality of tie bars 315. In the present embodiment, as shown in Fig. 16, the attachment plate 323 is fixed to a region which is the surface of the outside steel plate 313 and where a total of four tie bars 315 composed of two columns in the longitudinal direction x 2 columns in the transverse direction are positioned on the back side thereof. Next, upper and lower two H-steel members 324, 325 are disposed so as to be respectively equal in height to the tie bars 315 which are two rows in the longitudinal direction and positioned substantially at the center of the tie bars 315 which are two columns in the transverse direction. There is no particular restriction on a position at which the attachment plate 323 is fixed to the outside steel plate 313 and positions at which the H-steel members 324, 325 are fixed to the attachment plate 323. And, in the present embodiment, design of the position can be changed, whenever necessary.

As described so far, the pair of steel plates 312, 313 are connected only by the tie bars 315. Therefore, loads of the attachment plate 323, the H-steel members 324, 325 and the duct 321 are not supported only by the outside steel plate 313 but also supported by the outside steel plate 312 and the concrete 314 via individual tie bar 315.

Thereby, as compared with a case where loads of the duct 321 and others are shared by studs (not illustrated) installed on the outside steel plates 312, 313, defects and others are less likely to occur at individual portions which constitute the SC structure 311, thus making it possible to improve the strength of the SC structure 311 as a whole. It is therefore possible to attach the support member 322 to the outside steel plate 313 at any position without restriction.

As described so far, in the accessory attachment structure 310A of the present invention, the attachment plate 323 can be fixed by welding on the basis of the tie bars 315, the heads of which are exposed on the surface. Therefore, the load of the duct 321 can be dispersed in a substantially uniform manner to the tie bars 315.

Further, since heads of the tie bars 315 are exposed, in doing work for attaching the attachment plate 323 to the outside steel plate 313, the work can be done, with confirmation made for positions of the tie bars 315. It is therefore possible to perform construction in a shorter time.

[Ninth Embodiment]

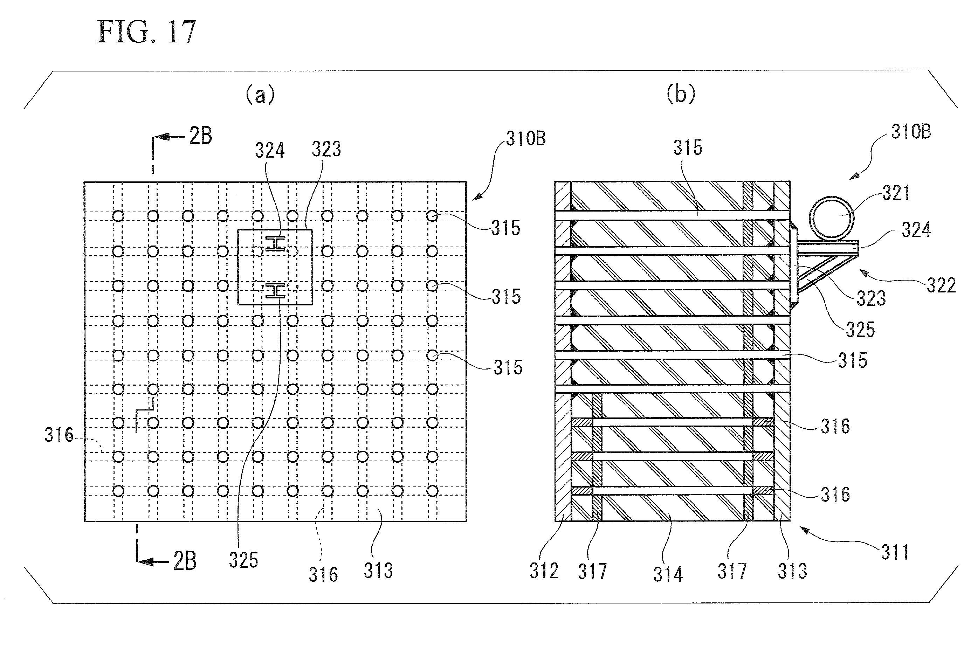

As shown in Fig. 17, an accessory attachment structure 310B of a Ninth Embodiment is different from the accessory attachment structure 310A of the Eighth Embodiment in having a rib 316 and an inner steel plate 317. Since other constitutions are the same as those of the Eighth Embodiment, the same reference numerals are given thereto, with a description omitted here.

The rib 316 is provided such that a plurality of long- and thin-rectangular flat plate members are assembled in a lattice form. The ribs 316 are individually fixed so as to extend all over the inner faces of outside steel plates 312, 313. Further, the inner steel plate 317 is fixed to a leading end of the rib 316 (that is, an end opposite to the outside steel plate 312 or 313) and disposed substantially parallel to the outside steel plates 312, 313.

According to the accessory attachment structure 310B of the present ninth embodiment, the rib 316 and the inner steel plate 317 are fixed to the inner faces of the outside steel plates 312, 313, by which the outside steel plates 312, 313 can be increased in rigidity. Thereby, as compared with the Eighth Embodiment, it is possible to further improve the strength of an SC structure 311 as a whole.

It is preferable that consideration be given to positions of the rib 316 and the inner steel plate 317 so that on installing concrete 314, the concrete 314 can be installed evenly between the outside steel plates without preventing the influx of ready-mixed concrete. With the same purpose, a hole for the influx of ready-mixed concrete or the like may be formed on the rib 316 and the inner face steel plate 317.

[Tenth Embodiment]

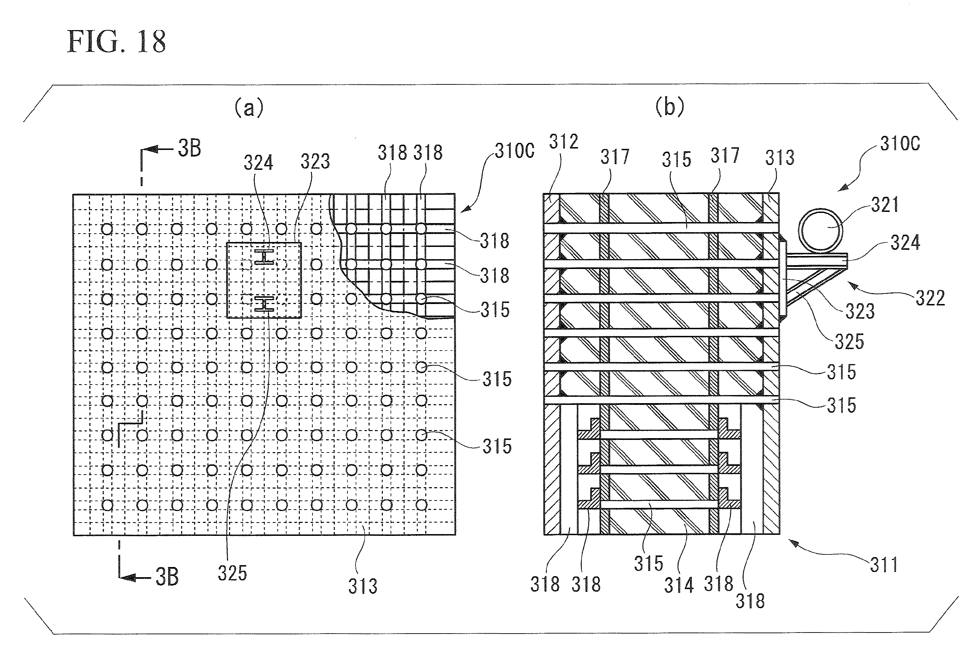

As shown in Fig. 18, an accessory attachment structure 310C of a Tenth Embodiment is different from the accessory attachment structure 310B of the Ninth Embodiment in constitution of a rib 318. Since other constitutions are the same as those of the Ninth Embodiment, the same reference numerals are given thereto, with a description omitted here.

The rib 318 is provided such that a plurality of angle bars, each of which has an L-shape cross-section, are assembled in a lattice form, and the ribs are fixed individually so as to extend all over the inner faces of the outside steel plates 312, 313. Further, as with the Ninth Embodiment, an inner steel plate 317 is installed which is fixed to the leading end of the rib 318 and disposed substantially parallel to the outside steel plates 312, 313. The rib 318 is assembled in a lattice form by stacking a plurality of angle bars extending in the longitudinal direction and a plurality of angle bars extending in the transverse direction in upper and lower two stages.

According to the accessory attachment structure 310C of the present tenth embodiment, it is possible to further ensure the strength thereof by using the L-shaped rib 318 in place of the rib 316. It is desirable that the rib 318 which extends horizontally (transversely) face upward for facilitating the influx of ready-mixed concrete. It is also desirable that a rib 318 which extends longitudinally be first installed on the back face of each of the outside steel plates 312, 313 and a rib 318 which extends transversely be then disposed so as to be overlaid on the above-described rib 318 (or via the inner face steel plate 317) in view of facilitating the influx of ready-mixed concrete. Further, it is preferable that the edge of the rib 318 toward the other side of each of the outside steel plates 312, 313 (thickness direction) be overlaid on the tie bar 315. Still further, in the illustrated example, the inner steel plate 317 is installed on a rib 318 which extends transversely. The inner steel plate 317 may be installed between a rib 318 which extends longitudinally and a rib 318 which extends transversely or may be installed on both of them (two inner steel plates). In addition, according to the present embodiment, one edge of an angle bar having an L-shaped cross-section is allowed to come into contact with the outside steel plates 312, 313 and be fixed. Therefore, the present embodiment is advantageous over the rib 316 of the Ninth Embodiment in that the rib 318 can be more simply and more rigidly fixed to the outside steel plates 312, 313.

[Eleventh Embodiment]

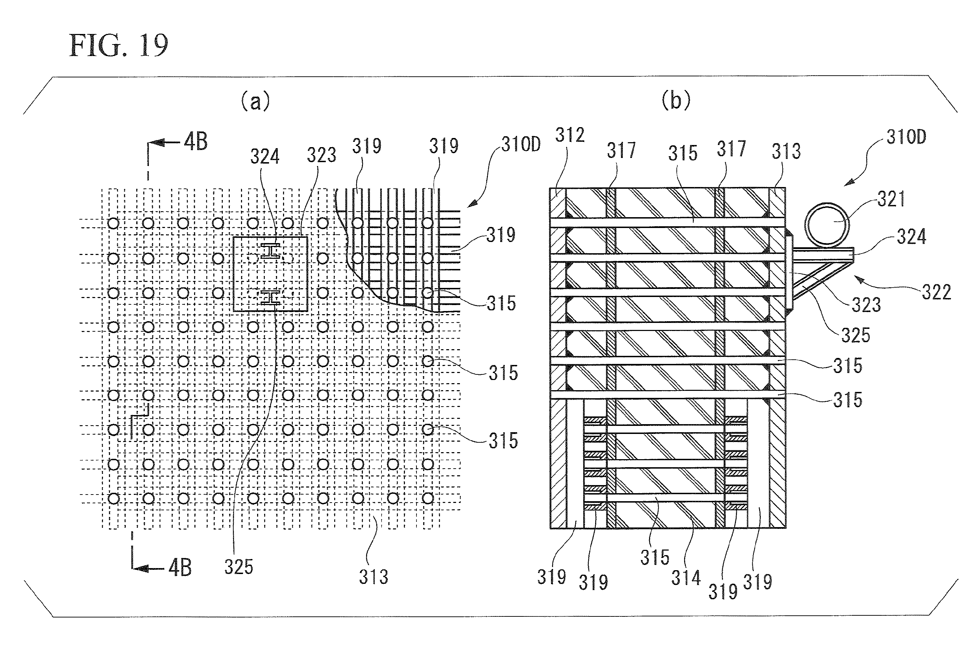

As shown in Fig. 19, an accessory attachment structure 310D of an Eleventh Embodiment is different from the accessory attachment structures 310B, 310C of the Ninth Embodiment and Tenth Embodiment in a constitution of a rib 319. Since other constitutions are the same as those of the Ninth Embodiment and Tenth Embodiment, the same reference numerals are given to them, with a description omitted here.

The rib 319 is provided such that a plurality of C-shaped channel bars, each of which has a C-shaped cross-section, are assembled in a lattice form. The ribs 319 are individually fixed so as to extend all over the inner faces of the outside steel plates 312, 313. Further, as with the Ninth Embodiment, an inner steel plate 317 is fixed to the leading end of the rib 319 and disposed substantially parallel to the outside steel plates 312, 313. In addition, the rib 319 is formed in a lattice form by stacking a plurality of angle bars extending longitudinally and a plurality of angle bars extending transversely in upper and lower two stages.

According to the accessory attachment structure 310D of the present eleventh embodiment, it is possible to further ensure the strength of the structure by using the C-shaped rib 319 in place of the ribs 316, 318. In order to facilitate the influx of ready-mixed concrete, it is desirable that a rib 319 extending horizontally (transversely) face its opening side toward a rib 319 extending longitudinally. It is also desirable that a rib 319 extending longitudinally be first installed on the back face of each of the outside steel plates 312, 313 and a rib 319 extending transversely be then disposed so as to be overlaid on the above-described rib 319 in view of facilitating the influx of ready-mixed concrete. In addition, the inner steel plate 317 is not installed on the opening side of the rib 319 extending transversely. Further, in the present embodiment, one edge of the channel bar having a C-shaped cross-section is allowed to come into contact with the outside steel plates 312, 313 and be fixed. Therefore, as with the Tenth Embodiment, the present embodiment is advantageous in fixing the rib 319 to the outside steel plates 312, 313 more simply and more rigidly.

A description has been so far given of the embodiment of the accessory attachment structure of the present invention, to which the present invention shall not be, however, restricted. The present invention may be modified whenever necessary within a scope not departing from the gist of the present invention.

In the present embodiment, for example, the duct 321 is given as a long object which is supported by the support member 322, to which the present invention shall not be restricted. The long object may include, for example, piping, a cable tray, and an electrical wire conductor.

Next, in the present embodiment, the support is provided by means of the H-steel members 324, 325 for supporting the duct 321 from below. However, the support may be constituted so as to hang down the duct 321. Further, the support member 322 may include an L-steel member, a channel and a pipe in place of the H-beam member.

In the present embodiment, the attachment plate 323 has a substantially square external shape when viewed from above. There is no particular restriction on the outer shape.

Further, constituent features of the above-described embodiment may be replaced by known constituent features whenever necessary within a scope not departing from the gist of the present invention. Still further, the above-described embodiment may be combined in an appropriate manner.

[Twelfth Embodiment]

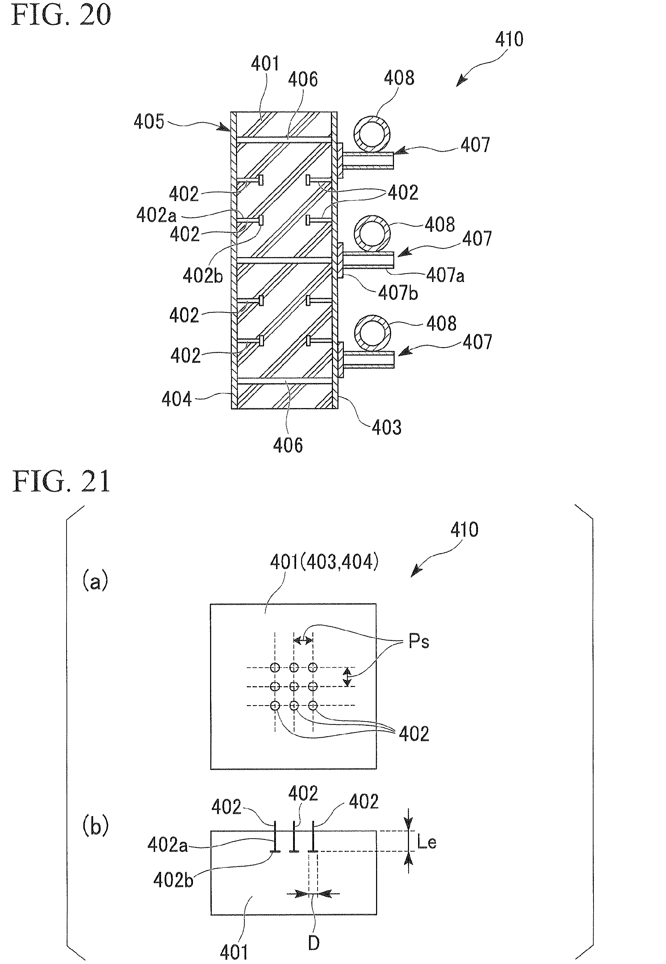

Hereinafter, a description will be given of a design system of an SC structure and a designmethod of an SC structure according to a Twelfth Embodiment of the present invention by referring to Fig. 20 to Fig. 25.

First, as shown in Fig. 20, an SC structure (steel plate-reinforced concrete structure) 410 of the present embodiment is constituted, for example, with a steel plate frame 405, a plurality of tie bars 406, a plurality of studs 402 and concrete 401. The steel plate frame 405 is formed with a plurality of outside steel plates 403, 404. The plurality of tie bars 406 connect a pair of outside steel plates 403, 404 disposed so as to be opposed to each other in a plurality of outside steel plates 403, 404 which constitute the steel plate frame 405. The plurality of studs 402 are fixedly installed on an inner face of each of the outside steel plates 403, 404. The concrete 401 is installed inside the steel plate frame 405.

One end of the tie bar 406 is joined to one outside steel plate 403 of the pair of outside steel plates 403, 404. The other end of the tie bar 406 is joined to the other outside steel plates 404 and placed inside the steel plate frame 405 (embedded into the concrete 401). The studs 402 enhance connection of the outside steel plates 403, 404 with the concrete 401, etc. Next, the stud 402 of the present embodiment is a headed stud equipped with a head 2b at one end of a shaft portion 402a. The other end of the shaft portion 402a of the stud 402 is joined to an inner face of each of the outside steel plates 403, 404 by fillet welding or the like and placed inside the steel plate frame 405 (embedded into the concrete 401). Further, in the SC structure 410 of the present embodiment, as schematically shown in Fig. 21 (a) and Fig. 21 (b), the plurality of studs 402 are disposed in a group.

Further, as shown in Fig. 20, an accessory 407 is attached to the SC structure 410. In the present embodiment,

EP 2 620 563 A1

the accessory 407 is a piping support 407a for supporting a piping 408. The piping support 407a is formed, for example, by means of an H-steel member. And, the piping support 407a is provided with an attachment plate 407b which is a steel plate. The attachment plate 407b is joined to the outside steel plate 403 by welding or the like and attached to the SC structure 410.

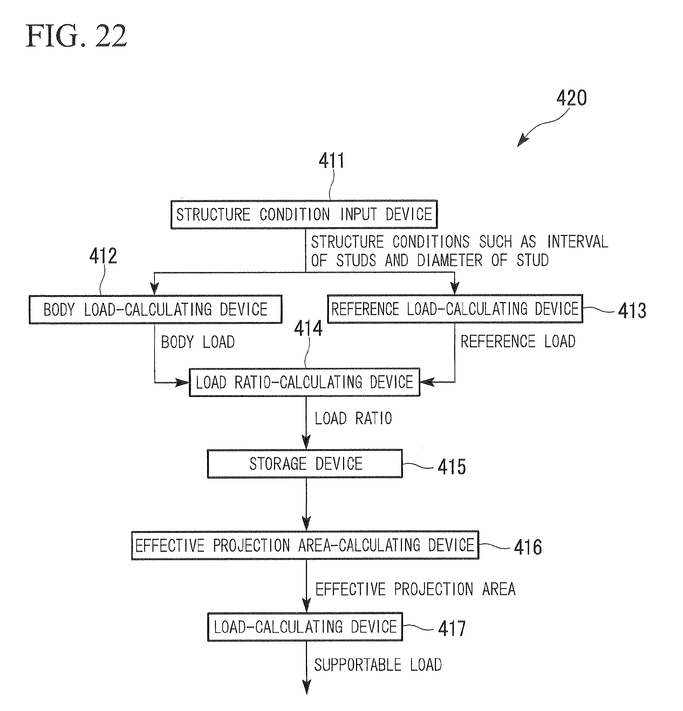

Next, in the present embodiment, a design system (design system of the SC structure) 420 is used to design the above-constituted SC structure 410. As shown in Fig. 22, the design system 420 is provided with a structure condition input device 411, a body load-calculating device 412, reference load-calculating device 413, load ratio-calculating device 414, storage device 415, effective projection area-calculating device 416, and load-calculating device 417.

In the present embodiment, in designing the SC structure 410, (in the design method of the SC structure of the present embodiment), the following idea is applied to a case where a large pull-out load is applied to one stud 402 at the center in a state that a uniform load is applied to each of the studs 402 disposed in a group (in a state shown in Fig. 27(b)).

First, the stud will be calculated for the load-bearing capacity in cone failure by using the following formula (2).

[Formula 2]

$$F = G(\alpha)$$
$$= \phi \times Ac \times \sqrt{Fc} \qquad (2)$$

Where φ is the reduction coefficient (safety coefficient), Ac is the projection area and Fc is the concrete strength.

Next, in the present embodiment, the structure condition input device 411 is used to input the stud interval, Ps, the stud embedded depth, Le, and the stud diameter D. Next, on the basis of structure conditions input by the structure condition input device 411, the body load-calculating device 412 is used to calculate an body load. Here, the body load is a load which can be taken into account in design such as its own weight of the SC structure 410 and seismic loads excluding a load of the accessory 407.

Further, the reference load-calculating device 413 is used to calculate a reference load which can be supported by each one of the studs when supported by all the plurality of studs. Here, the reference load is an allowable load of the stud 402. Still further, as shown in Fig. 21(b), the reference load is a cone pull-out-bearing capacity where a plurality of studs 402 are disposed in a group, an interval between the studs 402 is narrow, and a circular area in which the embedded depth Le of each stud 402 is given as a radius is overlaid on another circular area and also where an effective projection area is rectangular. In other words, the reference load means how much a cone pull-out force is where the effective projection area is rectangular.

Next, the load ratio-calculating device 414 is used to calculate a load ratio α of the body load to the reference load. Further, with reference to a relationship between the load ratio α and the effective projection area Ac stored by the storage device 415, the effective projection area Ac is calculated from the load ratio α by using the effective projection area-calculating device 416.

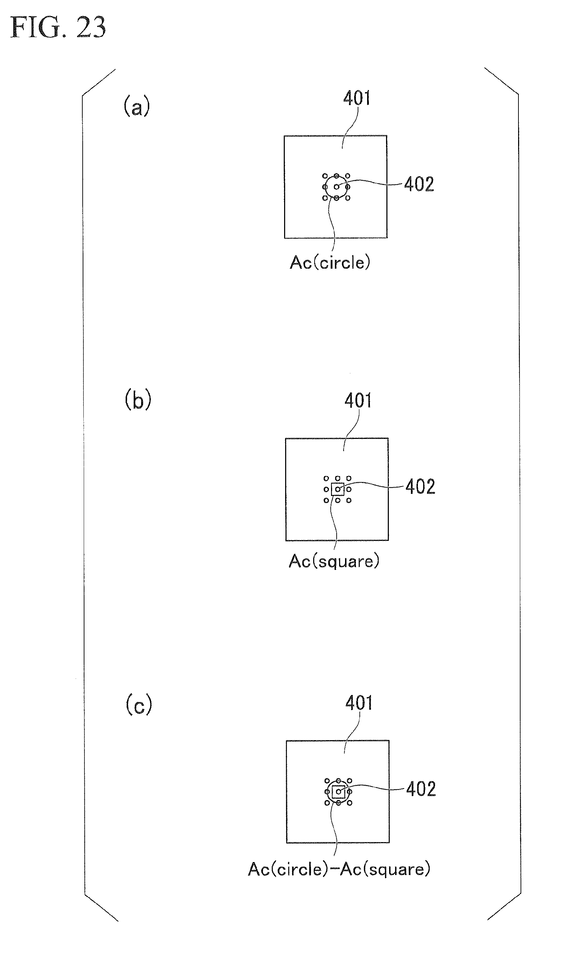

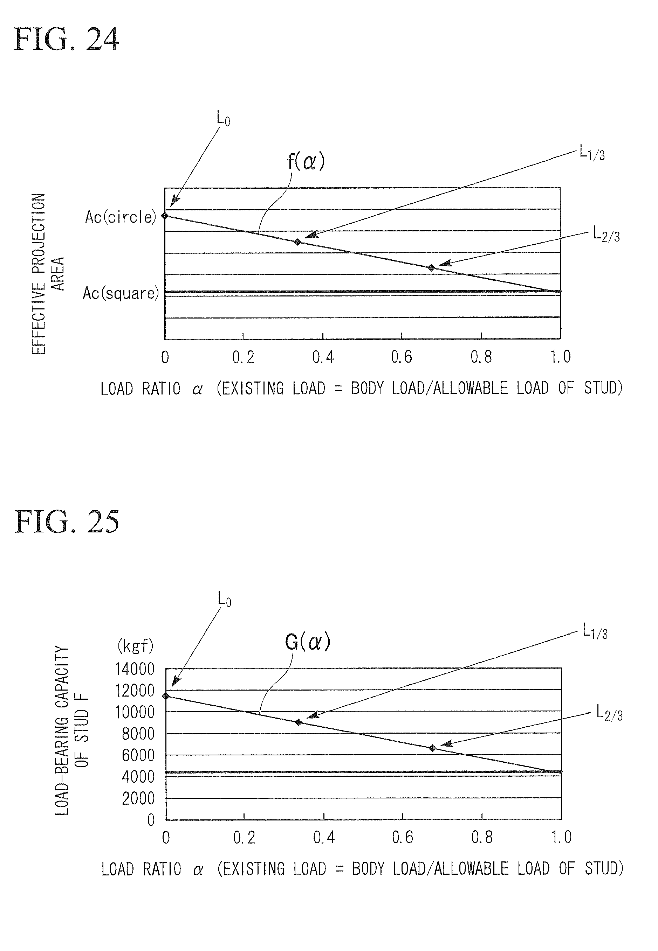

For example, in the present embodiment, the storage device 415 stores in advance a relationship between the load ratio and the effective projection area shown in Fig. 24. Next, the effective projection area-calculating device 416 determines a circular effective projection area Ac(Circle) by means of the formula (3) shown in Fig. 23(a) and determines a rectangular effective projection area Ac(Square) shown in Fig. 23(b) by means of the formula (4). Further, the effective projection area-calculating device 416 calculates the effective projection area Ac on the basis of the respective areas obtained from the formula (3) and the formula (4) and the load ratio α of the body load to the reference load calculated by the load ratio-calculating device 414 by referring to a relationship between the load ratio α and the effective projection area Ac (formula (5)).

[Formula 3]

$$Ac(\text{circle}) = \pi \times Le \times (Le + D) \qquad (3)$$

[Formula 4]

$$Ac(\text{square}) = Ps \times Ps - \pi \times D^2 / 4 \qquad (4)$$

[Formula 5]

$$Ac = f(\alpha)$$
$$= Ac(\text{circle}) - (Ac(\text{circle}) - Ac(\text{square})) \times \alpha \qquad (5)$$

On the basis of the effective projection area Ac calculated by the effective projection area-calculating device 416, the load-calculating device 417 is used to calculate a load which can be supported by one stud including an accessory load. Here, Fig. 25 shows results covering the load-bearing capacity of a stud preliminarily calculated by the above-described design method under the conditions that the stud interval Ps is 200 mm, the stud diameter D is 35 mm, the stud embedded depth Le is 170 mm and the concrete strength Fc is 30 MPa.

As shown in the above preliminary calculation results, according to the design method of the present embodiment, the stud can be determined for the load-bearing capacity in a state of $L_0$ where no body load is applied (in a state of the circular effective projection area $Ac_{(circle)}$). Also, the stud can be determined for the load-bearing capacity in a load state between a state that the body load is not applied at all and a state that an allowable load of the stud 402 (reference load) is applied as the body load (rectangular effective projection area $Ac_{(square)}$). The above-described load state includes, for example, a state of $L_{1/3}$ that 1/3 of the allowable load of the stud is applied as the body load and a state of $L_{2/3}$ that 2/3 of the allowable load of stud is applied as the body load.

That is, according to the design system 420 of SC structure 410 and the design method of SC structure 410 of the present embodiment, as compared with a conventional design method of an SC structure, a method for determining an effective projection area in cone failure is reviewed to determine an effective projection area Ac depending on an applied load. Thereby, the stud can be rationally evaluated for the load-bearing capacity.

A description has been so far given of one embodiment of the design system of the SC structure and the design method of the SC structure of the present invention. However, the present invention shall not be restricted to the Twelfth Embodiment described above and may be modified whenever necessary within a scope not departing from the gist of the present invention.

[Thirteenth Embodiment]

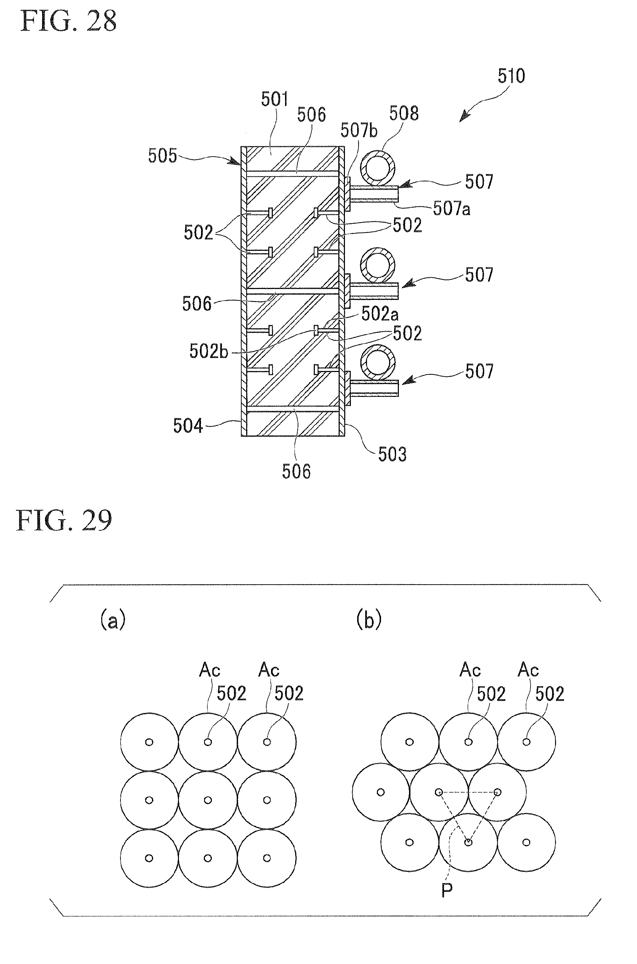

Hereinafter, a description will be given of an SC structure of a Thirteenth Embodiment of the present invention by referring to Fig. 28 to Fig. 31.

An SC structure (steel plate-reinforced concrete structure) 510 of the present embodiment is provided, for example as shown in Fig. 28, with a steel plate frame 505, a plurality of tie bars 506, a plurality of studs 502, and concrete 501. The steel plate frame 505 is formed with a plurality of outside steel plates 503, 504. The plurality of tie bars 506 connect a pair of outside steel plates 503, 504 disposed so as to be opposed to each other in the plurality of outside steel plates 503, 504 which form the steel plate frame 505. The plurality of studs 502 are fixedly installed on an inner face of each of the outside steel plates 503, 504. The concrete 501 is installed inside the steel plate frame 505.

One end of the tie bar 506 is joined to one outside steel plate 503 of the pair of outside steel plates 503, 504. The other end of the tie bar 506 is joined to the other outside steel plate 504 and placed inside the steel plate frame 505 (embedded into the concrete 501).

The studs 502 enhance connection of the outside steel plates 503, 504 with the concrete 501 or others. Next, the stud 502 of the present embodiment is a headed stud which is provided with a head 502b at one end of a shaft portion 502a. The other end of the shaft portion 502a of the stud 502 is joined to an inner face of each of the outside steel plates 503, 504 by fillet welding or the like and placed inside the steel plate frame 505 (embedded into the concrete 501).

In the SC structure 510 of the present embodiment, the plurality of studs 502 are disposed in a group and fixedly installed on the outside steel plates 503, 504. Further, the plurality of studs 502 are not arranged or disposed vertically and transversely (lattice form arrangement) as with a conventional case as shown in Fig. 29 (a) but arranged in a zigzag form as shown in Fig. 29(b).

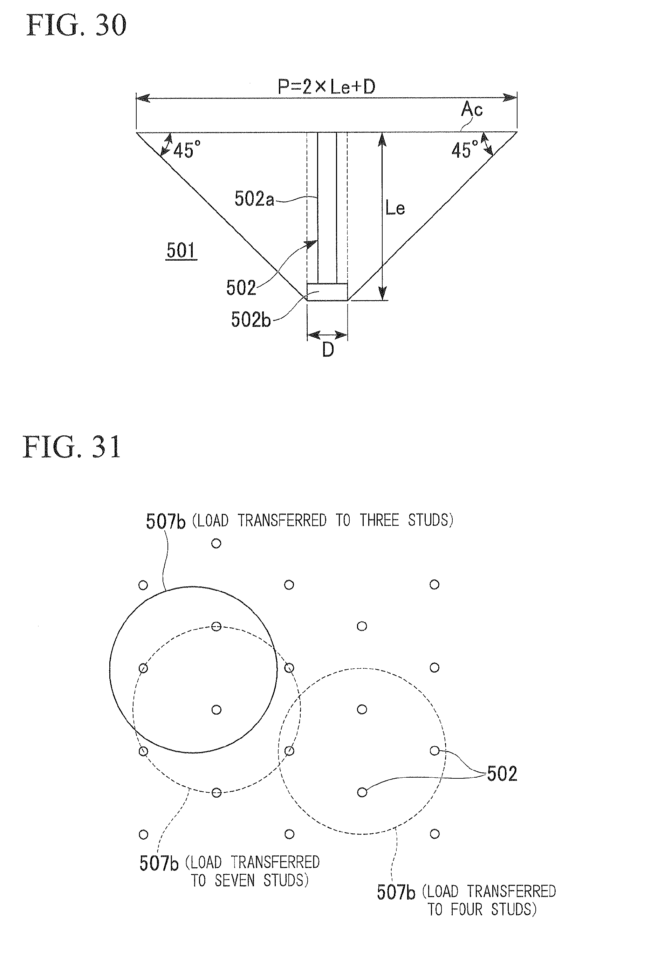

In the present embodiment, the plurality of studs 502 arranged in a zigzag form are arranged in such a manner that three mutually adjacent studs 502 take the vertexes of an equilateral triangle, as shown in Fig. 29(b) and Fig. 30. Further, at this time, a length P of one side of the equilateral triangle is set in accordance with the length of the stud. Specifically, in the present embodiment, when the diameter of the stud is given as D and the embedded depth of the stud 502 into the concrete 501(stud length) is given as Le, the length P of one side of the equilateral triangle is expressed as P = 2 x Le + D. Further, in the present embodiment, since a headed stud is used, the diameter D of the stud 502 is not the diameter of the shaft portion 502a but the diameter of the head 502b.

An idea used in evaluating the pull-out-bearing capacity of the stud 502 assumes cone failure and sets an angle of cone failure surface at 45 degrees. Therefore, where the plurality of studs 502 are arranged so that the three above-described adjacent studs 502 take the vertexes of an equilateral triangle, the interval P of adjacent studs 502, that is, the diameter of a circular projection plane Ac in cone failure is given as one side of the equilateral triangle, and the circular projection planes Ac of adjacent studs 502 are not overlaid but come in contact with each other. Therefore, the circular projection planes Ac of the plurality of studs 502 are not overlaid but in contact with each other, thereby, reaching a state that the circular projection planes Ac of the plurality of studs 502 are disposed most densely in a plane of the steel plate.

Next, in the SC structure 510 of the present embodiment, the plurality of studs 502 are disposed as described above, by which the studs are disposed uniformly and rationally all over on the surface of the SC structure 510. Further, no projection planes are overlapped between the studs, thereby eliminating the need for taking into account the effects of the studs disposed in a group on evaluation of the load-bearing capacity.

Therefore, in the SC structure 510 of the present embodiment, it is possible to evaluate the load-bearing capacity of each stud 502 as an independent stud 502. As compared with a case where the plurality of studs 502 are arranged and disposed vertically and transversely (lattice form arrangement), the stud can be evaluated rationally for the load-bearing capacity.

On the other hand, as shown in Fig. 28, an accessory 507 is attached to the SC structure 510 of the present embodiment. In the present embodiment, the accessory 507 is a piping support 507a for supporting a piping 508. The piping support 507a is formed, for example, with an H-steel member. Further, the piping support 507a of the accessory 507 is provided such that an attachment plate 507b which is a steel plate is attached and the attachment plate 507b is joined to the outside steel plate 503 by welding and attached to the SC structure 510.

Here, in the SC structure, on joining the attachment plate 507b (piping support 507a) to the outside steel plate 503, transfer of loads to as many studs 502 as possible is advantageous in view of the strength. In contrast, in the SC structure 510 of the present embodiment, a plurality of studs 502 are disposed so that as described above, three mutually adjacent studs 502 take the vertexes of an equilateral triangle and the plurality of studs 502 are disposed so that circular projection areas Ac are not overlaid but in contact with each other.

In the SC structure 510 of the present embodiment in which the plurality of studs 502 are disposed as described above, as shown in Fig. 31, the attachment plate 507b can be formed into a circular shape, the radius of which is equal to an attachment interval P between the studs 502. In this case, it is possible to transfer loads to seven studs 502 in a maximum case and three studs 502 in a minimum case.

A description has been so far given of one embodiment of an SC structure of the present invention. The present invention shall not be restricted to the Thirteenth Embodiment described above but may be modified whenever necessary within a scope not departing from the gist of the present invention.

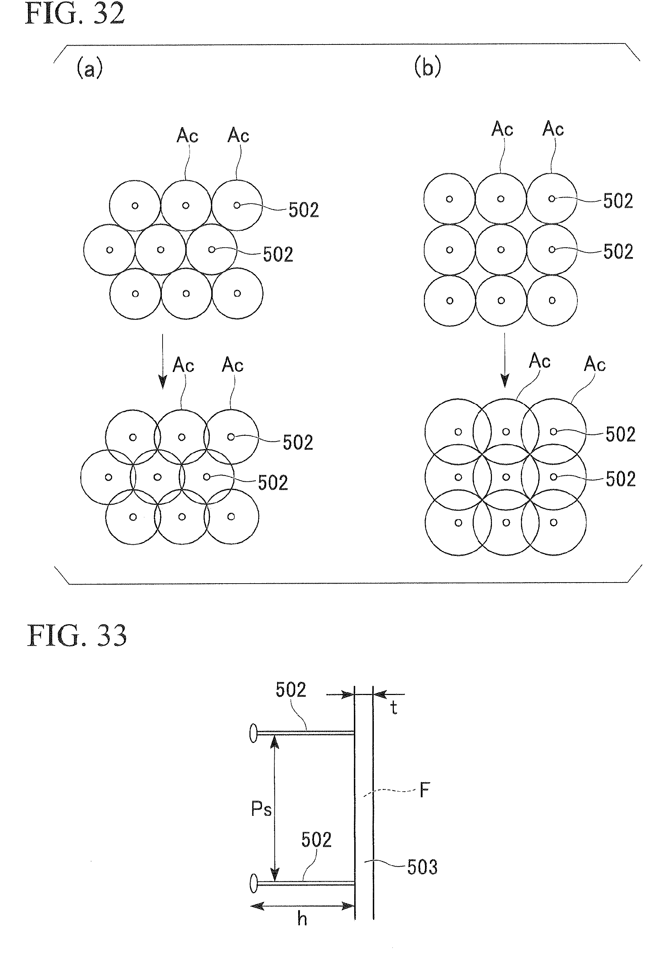

For example, in the present embodiment, a plurality of studs 502 are disposed in a zigzag form, that is, disposed so that three mutually adjacent studs 502 take the vertexes of an equilateral triangle, by which circular projection areas Ac are not overlaid but in contact with each other. In contrast, it is acceptable that as shown in Fig. 32(a), the circular projection areas Ac of mutually adjacent studs 502 on cone failure surfaces be overlaid with each other to supply the gap between the circular projection areas Ac.

As shown in Fig. 32 (b), even where the plurality of studs 502 is disposed in a lattice form, these studs 502 are to supply the gaps between the circular projection areas Ac. However, where the plurality of studs 502 is disposed in a lattice form, it is necessary that the stud embedded depth Le (=1.4141...) is multiplied by the square root ($\sqrt{2}$). However, where the plurality of studs 502 is disposed in a triangular form, the stud embedded depth Le is multiplied by the degree of $2/\sqrt{3}$ (=1.154...), thus making it possible to fill a plane of the steel plate. That is, an effect obtained by increasing the stud embedded depth Le (or decreasing the stud interval Ps) in order to increase the strength of attaching the outside steel plates 503, 504 to the concrete 501 by means of the studs 502 is made greater when the studs are disposed in an equilateral triangle as described in the present embodiment than when the studs are disposed in a conventional lattice form. Therefore, the present invention is able to effectively increase the strength of attaching the outside steel plates 503, 504 to the concrete 501 by means of the studs 502.

In the SC structure 510, disposal of the studs is decided in general so as not to cause buckling of the steel plates 503, 504 of the SC structure 510. Next, the following formula (2) expressed as a width-to-thickness ratio of the steel plate 503 supported at points by the studs 502 is indicated on page 49, "Technical Code for Seismic design of Steel Plate-reinforced Concrete Structures" Japan Electric Association Code (Atomic Power Section), JEAC 4618-2009 complied by the Japan Electric Association on March 30, 2010 (refer to Fig. 33). Here, Ps is the stud interval (mm), t is the thickness of the outside steel plate 503 (mm), and F is the reference value (N/mm$^2$) on decision of the allowable stress of the steel plate 503.

[Formula 6]

$$L/_t \leq 600/\sqrt{F} \qquad\qquad (6)$$

Next, where the stud interval Ps is set on the basis of the above-described formula (6), it is possible to establish the stud embedded depth Le which is more rational than the present embodiment, with the aim of rationally disposing the studs 502 in the form of an equilateral triangle. That is, in reverse to the present embodiment, even where the stud interval Ps is set first, it is possible to decide rationally the stud embedded depth Le on disposal of the studs 502 at the equilateral triangle.

[Fourteenth Embodiment]

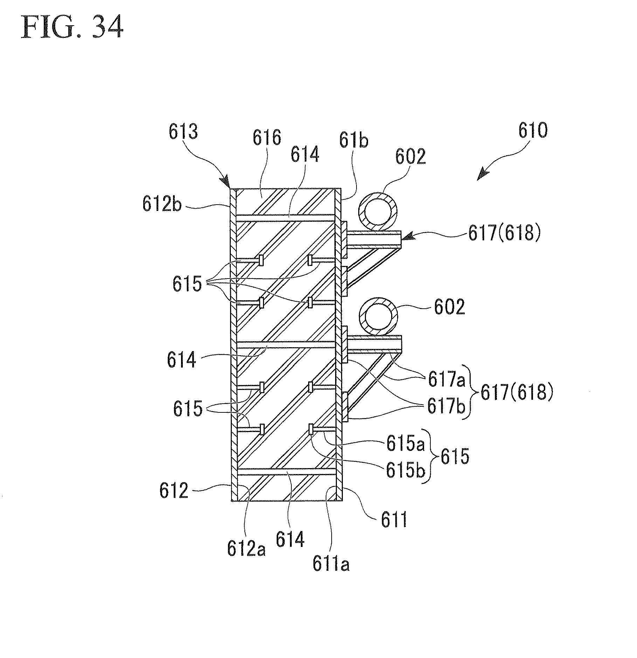

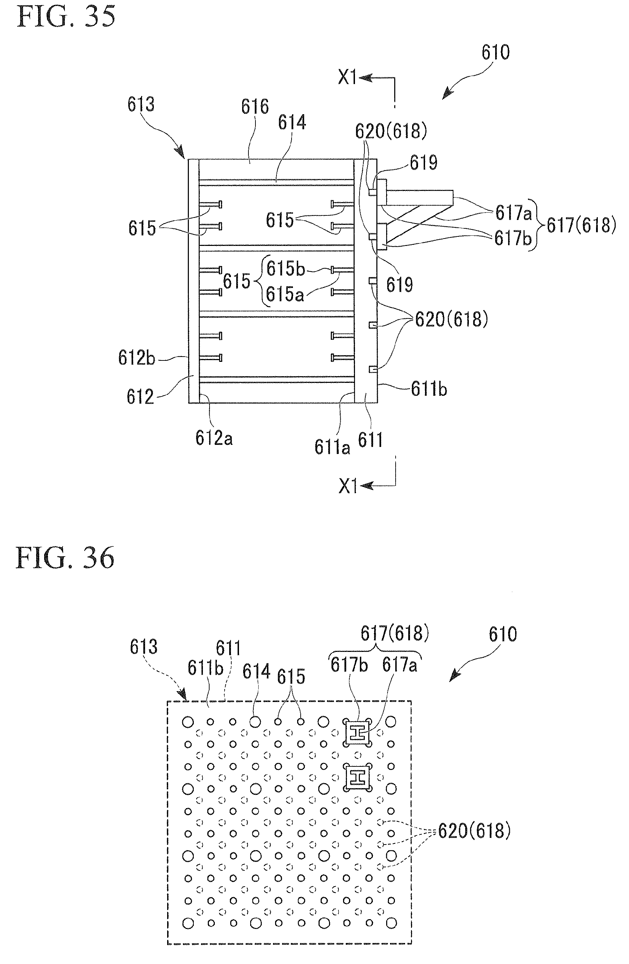

Hereinafter, a description will be given of a construction method of an SC structure and an SC structure of the Fourteenth Embodiment of the present invention by referring to Fig. 34 to Fig. 36.

An SC structure (steel plate-reinforced concrete structure) 610 of the present embodiment is, for example, as shown in Fig. 34, provided with a steel plate frame 613, a plurality of tie bars 614, a plurality of studs 615, and concrete 616. The steel plate frame 613 is formed with a plurality of outside steel plates 611, 612. The plurality of tie bars 614 connect a pair of outside steel plates 611, 612 which are opposed to each other in the plurality of outside steel plates 611, 612 which form the steel plate frame 613. The plurality of studs 615 are fixedly installed on inner faces 611a, 612a of the respective outside steel plates 611, 612. The concrete 616 is installed inside the steel plate frame 613.

One end of the tie bar 614 is joined to one outside steel plate 611 of the pair of outside steel plates 611, 612. The other end of the tie bar 614 is joined to the other outside steel plate 612 and placed inside the steel plate frame 613 (embedded into the concrete 616). The studs 615 enhance connection of the outside steel plates 611, 612 with the concrete 616, etc. Next, the stud 615 of the present embodiment is a headed stud equipped with a head 615b at one end of a shaft portion 615a. The other end of the shaft portion 615a of the stud 615 is joined to the inner face 611a or 612b of the outside steel plate 611 or 612 by fillet welding or the like and placed inside the steel plate frame 613 (embedded into the concrete 616).

As shown in Fig. 34 to Fig. 36, in the SC structure 610, accessories 617 are attached to outer faces 611b, 612b of the outside steel plates 611, 612. In the present embodiment, the accessory 617 supports the piping 602. The accessory 617 is provided with a piping support 617a formed by using an H-steel member and a steel-plate made attachment plate 617b attached to the piping support 617a and thereby attached to the outside steel plate 611. The attachment plate 617b is joined to the outside steel plate 611 by welding or the like. Here, in the present embodiment, the accessory 617 is made up of the piping support 617a and the attachment plate 617b. Further, a raised portion 619 is formed on an attachment face of the attachment plate 617b which is in contact with the outer face 611b of the outside steel plate 611.

On the other hand, in the SC structure 610 of the present embodiment, a plurality of studs 615 (tie bars 614) are arranged and disposed on the inner faces 611a, 612a of the outside steel plates 611, 612 and fixedly installed thereon. Further, on the outside steel plate 611, a center position surrounded by four studs 615 (and tie bars 614) thus arranged and disposed is given as an attachment position to which the accessory 617 can be attached. Still further, a locking portion 620 is installed at a plurality of attachment positions to which the accessories 617 are attached on the outer face 611b of the outside steel plate 611. The locking portion 620 of the present embodiment is an engagement recess portion (recess) with which a raised portion 619 formed on an attachment face of the attachment plate 617b is engaged. The attachment plate 617b and the piping support 617a are locked by the locking portion 620. In the present embodiment, the attachment device 618 is made up of the raised portion 619 and the locking portion 620 having an engagement recess portion. The raised portion 619 of the accessory 617 is selectively locked to any of the plurality of locking portions 620 installed at each of the plurality of attachment positions, by which the accessory 617 is fixed onto the outer face 611b of the outside steel plate 611.

Next, a description will be given of a construction method (production method) of the above-constituted SC structure 610 of the present embodiment. On constructing the SC structure 610 of the present embodiment, first, the plurality of studs 615 are fixedly installed on inner faces 611a, 612a of the outside steel plates 611, 612 (stud-attaching step).

Further, at least a part of the attachment device 618 is disposed at a plurality of attachment positions on the outer face 611b of the outside steel plate 611 (attachment device-preparing step). Here, in the present embodiment, at the attachment device-preparing step, a locking portion 620 (that is, an engagement recess portion), or a part of the attachment device 618, is formed at every attachment position which is a center position surrounded by four studs 615 (and the tie bars 614).

Next, the outside steel plates 611, 612 are disposed at predetermined positions to form a steel plate frame 613 (steel plate-installing step). Next, the concrete 616 is installed inside the steel plate frame 613 (concrete-installing step).

Next, the accessory 617 having the attachment plate 617b and the piping support 617a is fixed and attached to the outer face 611b of the outside steel plate 611 (accessory-fixing step). At this time, the raised portion 619 installed on the attachment plate 617b is selectively engaged with any of the engagement recess portions of the locking portion 620 installed at the plurality of attachment positions on the outer face 611b of the outside steel plate 611, by which the accessory 617 is locked. Further, the attachment plate 617b is fixed to the outer face 611b of the outside steel plate 611 by welding. Finally, a piping 602 is installed on the piping support 617a of the accessory 617 (piping-installing step). Thereby, the accessory 618 is attached to the outer face 611b of the outside steel plate 611 and construction is completed.

Next, in the construction method of the SC structure 610 of the present embodiment, at the attachment device-preparing step, at least the locking portion 620 (engagement recess portion) or the part of the attachment device 618 is disposed at the plurality of attachment positions on the outer face 611b of the outside steel plate 611 to which the accessory 617 can be attached. Therefore, at least a part of the attachment device 618 can be disposed, while the position of the stud 615 can be confirmed easily.

In the present embodiment, at the accessory-fixing step, the raised portion 619 of the attachment plate 617b of the accessory 617 is engaged with the engagement recess portion of the locking portion 620 to attach the accessory 617. Thereby, the accessory 617 can be attached, with confirmation given to the position of the stud 615. It is therefore possible to attach and construct the accessory 617, while a load applied to each one of the studs can reliably be kept low.

Further, the accessory 617 is selectively locked to any of the locking portions 620 installed at the plurality of attachment positions on the outer face 611b of the outside steel plate 611. Thereby, the accessory 617 can be attached at any given position.

Therefore, in the construction method of the SC structure 610 of the present embodiment, at the attachment device-preparing step, at least a part of the attachment device 618 is disposed at the plurality of attachment positions on the outer face 611b of the outside steel plate 611 to which the accessory 617 can be attached. It is therefore possible to dispose at least a part of the attachment device 618, while the position of the stud 615 can be confirmed easily. Next, at the piping-installing step, on installation of the piping 602 on the accessory 617, the piping 602 can be attached and constructed, while a load applied to each one of the studs is reliably kept low.

Further, in the SC structure 610 of the present embodiment, the raised portion 619 of the accessory 617 is selectively locked to any of the locking portions 620 install ed at the plurality of attachment positions on the outer face 611b of the outside steel plate 611. Therefore, it is possible to attach the accessory 617 to the outer face 611b of the outside steel plate 611 via the attachment device 618. Thereby, such a simple procedure is carried out that the plurality of attachment positions at which a load applied to each one of the studs can be kept low are set and the raised portion 619 of the main body 617 is locked to the locking portion 620 installed at the attachment position, thus making it possible to attach and construct the accessory 617 while the load applied to each one of the studs is reliably kept low. Still further, the raised portion 619 of the accessory 617 can be selectively locked to any of the locking portions 620 installed at the plurality of attachment positions on the outer face 611b of the outside steel plate 611. It is therefore possible to attach the accessory 617 to any given attachment position.

Therefore, according to the construction method of the SC structure 610 and the SC structure 610 of the present embodiment, the accessory 617 can be attached and constructed, while a load applied to each one of the studs is reliably kept low. As compared with a conventional case, it is also possible to reduce the time necessary for constructing the accessory 617 and also time necessary for designing the attachment position of the accessory 617.

A description has been so far given of one embodiment of the construction method of the SC structure and the SC structure of the present invention. However, the present invention shall not be restricted to the Fourteenth Embodiment described above but may be modified whenever necessary within a scope not departing from the gist of the present invention.

In the present embodiment, the locking portion 620 of the attachment device 618 is given as an engagement recess portion and the raised portion 619 installed on the attachment plate 617b of the accessory 617 is engaged with the engagement recess portion. However, it is acceptable that the locking portion 620 be given as an engagement raised portion and a recess portion installed on the accessory 617 be engaged with the engagement raised portion 620, by which the main body 617 is locked to the locking portion 620.

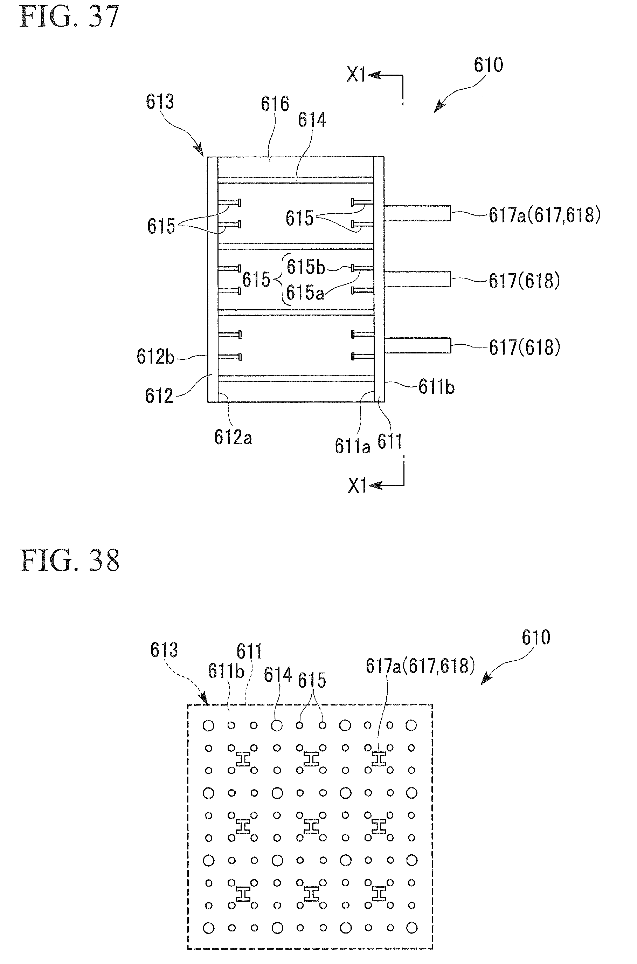

Further, as shown in Fig. 37 and Fig. 38, it is acceptable that a plurality of studs 615 be fixedly installed on inner faces 611a, 612a of the outside steel plates 611, 612, and the piping support 617a (accessory 617) be fixed and attached by welding or the like to a plurality of attachment positions on the outer face 611b of the outside steel plate 611. In this case also, as with the present embodiment, it is possible to attach and construct the accessory 617, while a load applied to each one of the studs is reliably kept low. Further, as compared with a conventional case, it is possible to reduce the time necessary for constructing the accessory 617 and the time necessary for designing the attachment position of the accessory.

[Fifteenth Embodiment]

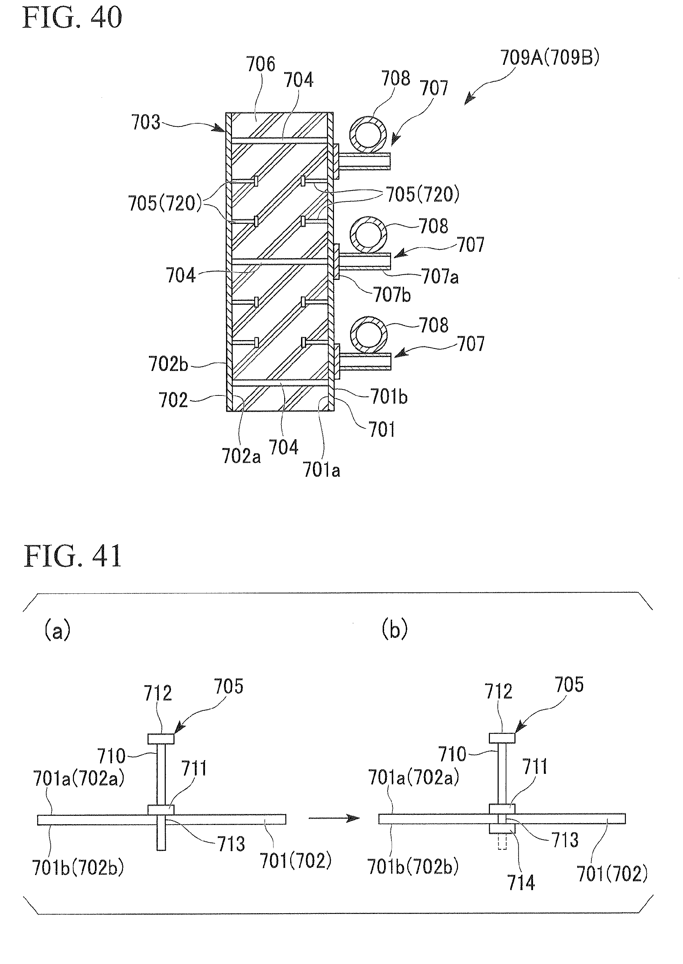

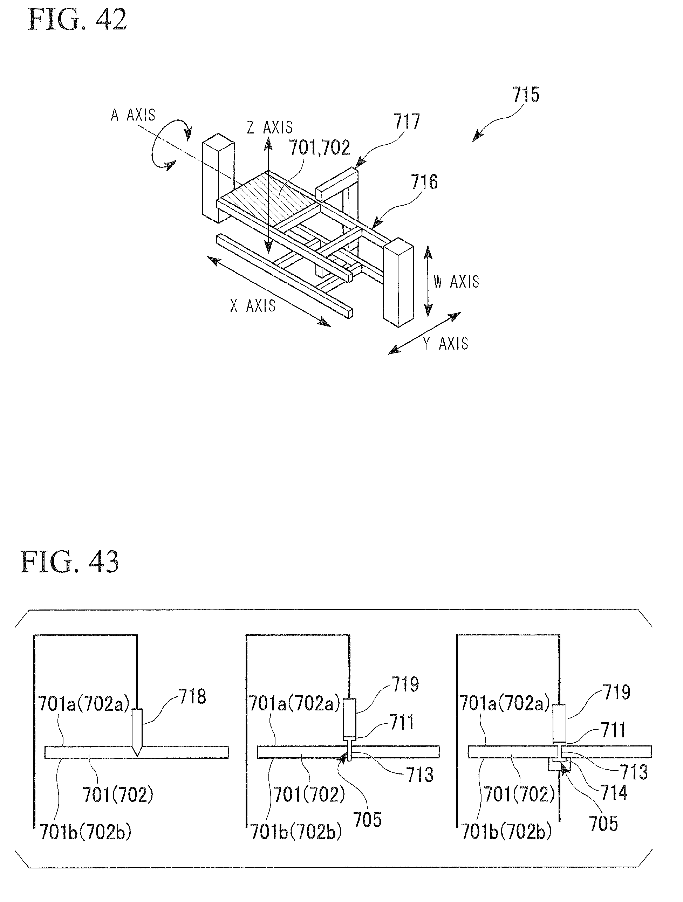

Hereinafter, a description will be given of an SC structure of a Fifteenth Embodiment of the present invention by referring to Fig. 40 Fig. 43.

An SC structure (steel plate-reinforced concrete structure) 709A of the present embodiment is, for example as shown in Fig. 40, provided with a steel plate frame 703, a plurality of tie bars 704, a plurality of studs 705, and concrete 706. The steel plate frame 703 is formed with a plurality of outside steel plates 701, 702. The plurality of tie bars 704 connect one pair of outside steel plates 701, 702 which are opposed to each other in the plurality of outside steel plates 701, 702 which constitute the steel plate frame 703. The plurality of studs 705 are fixedly installed on an inner face of each of the outside steel plates 701, 702. The concrete 706 is installed inside the steel plate frame 703.

Further, as shown in Fig. 40, an accessory 707 is attached to the SC structure 709A. In the present embodiment, the accessory 707 is a piping support 707a for supporting a piping 708. The piping support 707a is formed, for example, by using an H-steel member. The piping support 707a of the accessory 707 is provided with an attachment plate (attachment plate) 707b which is a steel plate. The attachment plate 707b is joined to the outside steel plate 701 by welding or the like. Thereby, the accessory 707 is attached to the SC structure 709A.

One end of the tie bar 704 of the SC structure 709A is joined to one outside steel plate 701 of the pair of outside steel plate 701, 702. The other end of the tie bar 704 is joined to the other outside steel plate 702 and placed inside the steel plate frame 703 (embedded into the concrete 706).

The studs 705 enhance connection of the outside steel plates 701, 702 with the concrete 706, etc. The studs 705 are fixed to the outside steel plates 701, 702 and installed so as to protrude into the steel plate frame 703. On the other hand, the stud 705 of the present embodiment is provided with a cylindrical shaft portion 710, a first holding portion (the other holding portion) 711 and a head 712, as shown in Fig. 41(a). The first holding portion 711 is placed to the other side only by a predetermined length from one side of the shaft portion 710 which is fixed to the outside steel plate 701 (702) and formed integrally. The head 712 is integrally formed on the other side of the shaft portion 710. Further, the first holding portion 711 and the head 712 are respectively formed in the shape of a circular plate, for example. The first holding portion 711 and the head 712 are placed in such a manner that their respective center axes are made coaxial with the shaft portion 710 and the outer-circumference edge is allowed to protrude radically outward from an outer circumference face of the shaft portion 710.

In the SC structure 709A, a through-hole 713 which pass through from an inner face 701a (702a) to an outer face 701b (702b) is formed at a predetermined position of the outside steel plate 701 (702) to which the stud 705 is attached. In the SC structure 709A of the present embodiment, as shown in Fig. 41 (a), one side of the shaft portion 710 is inserted through the through-hole 713 of the outside steel plate 701 (702) and the first holding portion 711 is allowed to come into contact with the inner face 701a (702a) of the outside steel plate 701 (702), thereby placing the stud 705. Next, as shown in Fig. 41 (b), one side (end) of the shaft portion 710 protruding beyond the through-hole 713 outside from the outer face 701b (702b) of the outside steel plate 701 (702) is collapsed to form a second holding portion (one holding portion) 714, which is then crimped. Thereby, one pair of holding portions 711, 714 are used to hold the outside steel plate 701 (702) between them, by which the stud 705 is fixed to a predetermined position of the outside steel plate 701 (702) in a manner similar to a rivet structure.

Here, it is desirable that the studs 705 be constructed by being attached to the outside steel plates 701, 702 with use of an AR machine (automatic studding machine, automatic riveter) in a modified manner.

As shown in Fig. 42, an ARmachine 715 is, for example, provided with a positioning portion 716 and an AR main body 717. The positioning portion 716 retains the outside steel plates 701, 702 and also positions them. The AR main body 717 attaches studs 705 to the outside steel plates 701, 702. Further, the positioning portion 716 is actuated on the basis of triaxial translation (forward and backward movement along the X axis, the Y axis and the Z axis) and biaxial rotation of A axis (around the X axis) and B axis (around the Y axis; movement by a difference in height between the Z axis and the W axis). As shown in Fig. 42 and Fig. 43, the AR main body 717 is provided with a cutter head 718 and a working head 719. The cutter head 718 drills a through-hole 713 at a predetermined position of the outside steel plate 701, 702 decided by the positioning portion 716. The working head 719 attaches the studs 705 to the outside steel plates 701, 702.

On attachment and construction of the studs 705 by using the AR machine 715, first, positions at which the studs 705 are attached to the outside steel plate 701 (702) are stored in an NC machine. Next, as shown in Fig. 42 and Fig. 43(a), the outside steel plate 701 (702) is set on the positioning portion 716 to start construction. Thereby, the positioning portion 716 is actuated to place the outside steel plate 701 (702) at a predetermined position. Next, the NC controlled cutter head 718 is used to drill the through-hole 713 at a position to which the outside steel plate 701 (702) is attached by the stud. Next, as shown in Fig. 43(b), the working head 719 retains the stud 705 and inserts one end of the shaft portion 710 into the through-hole 713. Herewith, as shown in Fig. 43(c), one end of the shaft portion 710 is crimped to form a second holding portion 714.

Thereby, in the SC structure 709A of the present embodiment, the AR machine 715 can be used to attach the studs 705 automatically and rationally to the outside steel plates 701, 702. Further, as compared with a conventional case where the studs 705 are fixed to the outside steel plates 701, 702 by welding, it is possible to reduce man-hours necessary for constructing the studs and also reduce the construction cost.

On the other hand, as shown in Fig. 40, the SC structure 709A is constructed in such a manner that the steel plate frame 703 is formed with the outside steel plates 701, 702 to which the studs 705 are attached and connected by the tie bars 704 and then the concrete 706 is installed inside the steel plate frame 703. When the accessory 707 is attached to the SC structure 709A of the present embodiment, as shown in Fig. 40 and Fig. 41(b), the stud 705 of the SC structure 709A is fixed by holding the outside steel plate 701 by the pair of holding portions 711, 714. Therefore, it is possible to locate a position of the stud 705 from outside of the outside steel plate 701 by means of the second holding portion 714 installed on the outer face 701b of the outside steel plate 701.

Thereby, in the SC structure 709A of the present embodiment, on attachment of the accessory 707, the position of the stud 705 can be easily located by means of one holding portion 714. As a result, it is possible to reduce the time necessary for constructing the accessory 707 and the time necessary for designing an attachment position of the accessory 707.

[Sixteenth Embodiment]

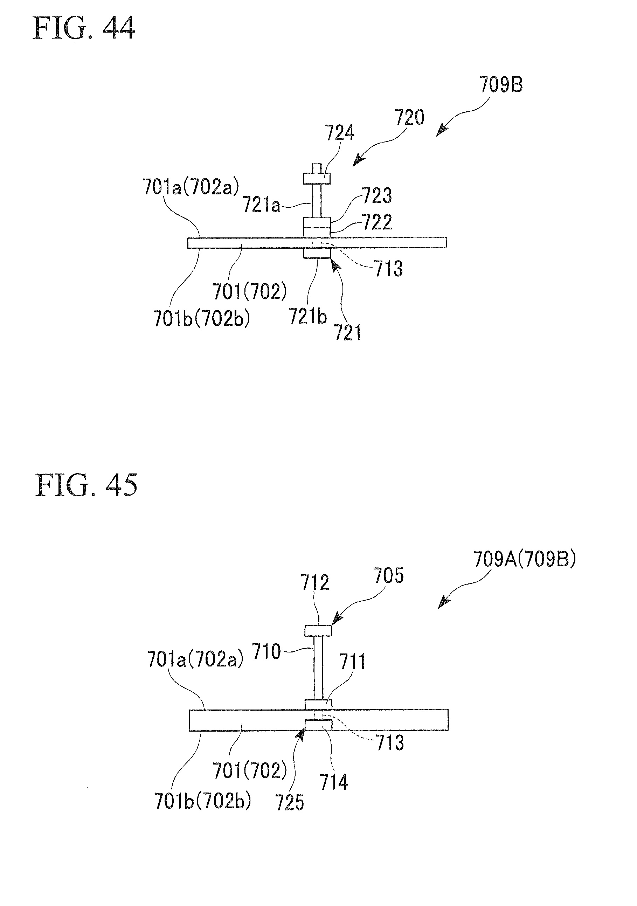

Next, with reference to Fig. 40 and Fig. 44, a description will be given of an SC structure of a Sixteenth Embodiment of the present invention. A detailed description will be omitted of the same constitutions as those of Fifteenth Embodiment.

As shown in Fig. 44, in an SC structure (steel plate-reinforced concrete structure) 709B of the present embodiment, each stud 720 is constituted with a bolt 721 and three nuts 722, 723, 724. Next, in the SC structure 709B, a through-hole 713 is formed at a predetermined position of an outside steel plate 701 (702) to which the stud 720 is attached. A shaft portion 721a of the bolt 721 of the stud 720 is inserted through the through-hole 713 from an outer face 701b (702b) of the outside steel plate 701 (702), by which the head 721b of the bolt 721 is allowed to come into contact with the outer face 701b (702b) of the outside steel plate 701 (702). Further, the first nut 722 is screwed into the shaft portion 721a of the bolt 721 which protrudes to the inner face 701a (702a) of the outside steel plate 701 (702). Thereby, the head 721b of the bolt 721 (a second holding portion, one holding portion) and the first nut 722 (first holding portion, the other holding portion) are given as a pair of holding portions 721b, 722, thereby holding the outside steel plate 701 (702) between them. Thereby, the stud 720 is fixed to the outside steel plate 701 (702) by the head 721b of the bolt 721 and the first nut 722.

The second nut 723 is screwed into the shaft portion 721a of the bolt 721, by which the first nut 722 is fastened with the second nut 723. As a result, the outside steel plate 701 (702) is fastened by these two nuts of the first nut 722 and the second nut 723, thereby preventing loosening of the nut 722. As a result, the stud 720 is reliably fixed to the outside steel plate 701 (702).

Further, the third nut 724 is screwed into the shaft portion 721a of the bolt 721. At this time, the third nut 724 is placed on the other side of the shaft portion 721a of the bolt 721. As a result, the stud 720 of the present embodiment has a head at the other end by the third nut 724 and formed like a headed stud.

In the above-constituted SC structure 709B of the present embodiment, the stud 720 is made up of the bolt 721 and the nuts 722, 723, 724. The shaft portion 721a of the bolt 721 is inserted through the through-hole 713 on the outside steel plate 701 (702) to fasten the nut 722, by which the head 721b of the bolt 721 and the nut 722 are given as a pair of holding portions and hold the outside steel plate 701 (702) between them. As a result, the stud 720 can be fixed to the SC structure 709B. Thereby, also in the SC structure 709B of the present embodiment, as compared with a conventional case where a stud is fixed to the outside steel plate by welding, it is possible to reduce man-hours for constructing the stud and also reduce the construction costs.

In the SC structure 709B of the present embodiment, the outside steel plate 701 (702) is held between a pair of holding portions, that is, the head 721b of the bolt 721 and the nut 722 and fixed by the stud 720 of the SC structure 709B. Therefore, it is possible to locate a position of the stud 720 from outside of the outside steel plate 701 (702) by means of the head 721b of the bolt 721 which is a second holding portion installed on an outer face 701b (702b) of the outside steel plate 701 (702) on attachment of an accessory 707.

Accordingly, in the SC structure 709B of the present embodiment as well, as with Fifteenth Embodiment, the position of the stud 720 can be easily located by means of one holding portion 721b on attachment of the accessory 707. Therefore, it is possible to reduce the time necessary for constructing the accessory 707 and also the time necessary for designing an attachment position of the accessory 707.

A description has been so far given of the Fifteenth Embodiment and Sixteenth Embodiment of the SC structures of the present invention. The present invention shall not be, however, restricted to the Fifteenth Embodiment and Sixteenth Embodiment described above and may be modified whenever necessary within a scope not departing from the gist of the present invention.

As shown in Fig. 45, for example, a recess portion 725 communicatively connected to the through-hole 713 may be formed on the outer face 701b (702b) of the outside steel plate 701 (702). In this case, as compared with the Fifteenth Embodiment, one end of the shaft portion 710 of the stud 705 is inserted into the through-hole 713 from the inner face 701a (702a) of the outside steel plate 701 (702) to form a second holding portion 714, and also the second holding portion 714 can be placed into the recess portion 725. Further, as compared with the Sixteenth Embodiment, the head 721b of the bolt 721 of the stud 720 at the second holding portion can be placed into the recess portion 725. It is, thereby, possible to prevent formation of irregularities on the outer face 701b (702b) of the outside steel plate 701 (702) by the second holding portion 721b.

Industrial Applicability

The present invention is able to reduce a load which is applied to each one of the bars. Thus, even where a load of an accessory received by the SC structure is relatively great, the accessory can be attached to any given position.

According to the present invention, stress resulting from the load of the accessory is allowed to act on a tie bar via an attachment plate. Further, it is possible to easily locate an attachment position of the accessory and reduce a load applied to each one of the tie bars on attachment of the accessory,

The accessory attachment structure of the present invention can be increased in rigidity by a simple and lightweight structure and also attach an accessory after confirmation is made for strength of an attachment position.

In the design system of the SC structure and the design method of the SC structure of the present invention, as compared with a conventional design method of the SC structure, a stud can be evaluated rationally for the load-bearing capacity thereof by reviewing a method determining an effective projection area in cone failure.

In the SC structure of the present invention, a plurality of studs are provided by being arranged in a zigzag form, thus making it possible to evaluate each of the studs as an independent stud. The stud can be evaluated rationally for the load-bearing capacity, as compared with a case where a plurality of studs are arranged and disposed vertically and transversely (where they are arranged in a lattice form).

According to the construction method of the SC structure and the SC structure of the present invention, it is possible to set a plurality of attachment positions at which a load applied to each one of the studs can be kept low while a position of the stud is easily confirmed and also attachment device can be installed at the attachment position. It is thereby possible to attach and construct an accessory in a state that a load applied to each one of the studs is reliably kept low. As compared with a conventional case, it is possible to reduce the time necessary for constructing the accessory and also the time necessary for designing the attachment position of the accessory.

In the SC structure of the present invention, a shaft portion is inserted through a through-hole formed on an outside steel plate, and a pair of holding portions installed integrally at this shaft portion are used to hold the outside steel plate between them, thereby fixing a stud. It is therefore possible to locate a position of the stud from outside of the outside steel plate by means of one holding portion installed on an outer face of the outside steel plate. Accordingly, on attachment of an accessory, a position of the stud can be easily located by means of one holding portion. It is therefore possible to reduce the time necessary for constructing the accessory and also the time necessary for designing an attachment position of the accessory.

Description of Reference Numerals

    10: SC structure (steel plate-reinforced concrete structure)
    11: outside steel plate
    12: bar
    13: tie bar
    14: stud
    15: concrete
    20: piping support
    22: piping support
    21: attachment face
    21a: attachment face
    21b: attachment face
    25: piping
    30: attachment plate
    33: attachment plate
    35: attachment plate

36: attachment plate
37: attachment plate
38: attachment plate
40: attachment plate
45: attachment plate
31: accessory joint face
32: steel plate joint face
201: SC structure (steel plate-reinforced concrete structure)
202: outside steel plate
203: bar
204: concrete
205: tie bar
206: stud
208: piping support (accessory)
209: attachment plate
211: nut
212: bolt
214: internal thread hole (internal thread portion)
217: internal thread hole (internal thread portion)
218: bolt
220: external thread portion
225: piping
310: accessory attachment structure
310A: accessory attachment structure
310B: accessory attachment structure
310C: accessory attachment structure
310D: accessory attachment structure
311: SC structure (steel plate-reinforced concrete structure)
312: outside steel plate
313: outside steel plate
314: concrete
315: tie bar
316: rib
317: inner steel plate
318: rib
319: rib
312: duct (long object)
322: support member
323: attachment plate
401: concrete
402: stud
402a: shaft portion
402b: head
403: outside steel plate
404: outside steel plate
405: steel plate frame
406: tie bar
407: accessory
407a: piping support
407b: attachment plate
408: piping
410: SC structure (steel plate-reinforced concrete structure)
411: structure condition input device
412: body load-calculating device
413: reference load-calculating device
414: load ratio-calculating device
415: storage device
416: effective projection area-calculating device

417: load-calculating device
420: design system of SC structure
501: concrete
502: stud
502a: shaft portion
502b: head
503: outside steel plate
504: outside steel plate
505: steel plate frame
506: tie bar
507: accessory
507a: piping support
507b: attachment plate
508: piping
510: SC structure (steel plate-reinforced concrete structure)
Ac: effective projection area (projection plane)
602: piping
610: SC structure (steel plate-reinforced concrete structure)
611: outside steel plate
611a: inner face
611b: outer face
612: outside steel plate
612a: inner face
612b: outer face
613: steel plate frame
614: tie bar
615: stud
615a: shaft portion
615b: head
616: concrete
617: accessory
617a: piping support
617b: attachment plate
618: attachment device
619: raised portion
620: locking portion (engagement recess portion)
701: outside steel plate
701a: inner face
701b: outer face
702: outside steel plate
702a: inner face
702b: outer face
703: steel plate frame
704: tie bar
705: stud
706: concrete
707: accessory
707a: piping support
707b: attachment plate
708: piping
709A: SC structure (steel plate-reinforced concrete structure)
709B: SC structure (steel plate-reinforced concrete structure)
710: shaft portion
711: first holding portion (other holding portion)
712: head
713: through-hole
714: second holding portion (one holding portion)
715: AR machine

716: positioning portion
717: AR main body
718: cutter head
719: working head
720: stud
721: bolt
721a: shaft portion
721b: head (second holding portion, one holding portion)
722: nut (first holding portion, other holding portion)
723: nut
724: nut
725: recess portion

## Claims

1. An accessory attachment structure for attaching an accessory to a steel plate-reinforced concrete structure, the steel plate-reinforced concrete structure being provided with a steel plate frame formed with a plurality of outside steel plates, a plurality of bars fixedly installed on an inner face of the outside steel plate, and concrete installed inside the steel plate frame, the accessory attachment structure comprising:

    an attachment plate in which one face thereof is attached to the outside steel plate and the accessory is attached to the other face thereof; wherein
    the size of the other face of the attachment plate is larger than that of a whole attachment face to be attached to the attachment plate of the accessory,
    the size of the one face of the attachment plate is equal to or greater than the other face thereof, and
    the length of the attachment plate in any direction along the one face of the attachment plate is at least two times greater than a mutual interval between the plurality of bars.

2. The accessory attachment structure according to Claim 1, wherein
    the plurality of accessories are attached to the attachment plate, and
    the size of the other face of the attachment plate is larger than that of attachment faces of each of the plurality of accessories where the plurality of accessories are attached to the attachment plate.

3. The accessory attachment structure according to Claim 1 or Claim 2, wherein
    the accessory is provided with a plurality of the attachment faces which are spaced apart from each other, and
    the size of the other face of the attachment plate is larger than that of the plurality of attachment faces of the accessory where the accessory is attached to the attachment plate.

4. The accessory attachment structure according to any one of Claim 1 to Claim 3, wherein
    the attachment plate is gradually decreased in area of a cross-section perpendicular to a direction from the one face to the other face in moving along this direction.

5. The accessory attachment structure according to any one of Claim 1 to Claim 3, wherein
    the attachment plate is provided with a plurality of plates which are stacked in a direction from the one face to the other face and also joined together, and,
    the plurality of plates are such that a plate on the other face is smaller in area of a cross-section perpendicular to the above-described direction than a plate on the one face.

6. The accessory attachment structure according to any one of Claim 1 to Claim 5, wherein
    the attachment plate is joined to the outside steel plate by welding.

7. An accessory attachment structure for attaching an accessory to a steel plate-reinforced concrete structure, the steel plate-reinforced concrete structure being provided with a steel plate frame formed with a plurality of outside steel plates, concrete installed inside the steel plate frame, and a plurality of tie bars passing through the outside steel plate and the concrete, the accessory attachment structure comprising:

    an attachment plate in which one face thereof is attached on an outer face of the outside steel plate and the accessory is attached to the other face thereof; and
an external thread portion or an internal thread portion which is exposed on an outer face of the outside steel plate, and provided with the tie bar, wherein
the attachment plate is fastened and fixed to the outside steel plate by means of a nut or a bolt which is screwed into the external thread portion or the internal thread portion of at least one of the plurality of tie bars.

8. The accessory attachment structure according to Claim 7, wherein
both ends of the tie bar are screwed into the outside steel plate and integrally joined to the attachment plate.

9. An accessory attachment structure for attaching an accessory to a steel plate-reinforced concrete structure to which concrete is installed between a pair of outside steel plates opposed to each other at a predetermined interval, the accessory attachment structure comprising:

an attachment plate, wherein the accessory is attached via thereof to the steel plate-reinforced concrete structure;
wherein the pair of outside steel plates are connected only by a tie bar, the both ends of which are fixed to each of the outside steel plates and
the attachment plate is attached to a region to which at least the plurality of tie bars are attached.

10. The accessory attachment structure according to Claim 9, wherein
on an inner face of the outside steel plate, a rib extending along the inner face thereof is fixed.

11. The accessory attachment structure according to claim 10, wherein
an inner steel plate parallel to the outside steel plate is fixed to the leading end of the rib.

12. The accessory attachment structure according to Claim 10, wherein
the rib arranges a plurality of flat plate members in a lattice form.

13. The accessory attachment structure according to Claim 10, wherein
the rib arranges a plurality of angle bars, each of which has an approximately L- shaped cross-section, in a lattice form.

14. The accessory attachment structure according to Claim 10, wherein
the rib arranges a plurality of channel bars, each of which has an approximately C-shaped cross-section, in a lattice form.

15. A design system of steel plate-reinforced concrete structure, the steel plate-reinforced concrete structure being provided with a steel plate frame formed with a plurality of outside steel plates, a stud fixedly installed on an inner face of the outside steel plate, and concrete installed inside the steel plate frame, the design system comprising:

a structure condition input device which inputs structure conditions including a stud interval and a stud length;
a body load-calculating device which calculates a body load on the basis of the structure conditions input by the structure condition input device;
a reference load-calculating device which calculates a reference load which can be supported by each one of the studs where supported by a plurality of studs as a whole;
a load ratio-calculating device which calculates a load ratio of body load to reference load;
a storage device which stores a relationship between the load ratio and an effective projection area;
an effective projection area-calculating device which calculates the effective projection area from the load ratio by referring to a relationship between the load ratio and the effective projection area stored by the storage device; and
a load-calculating device which calculates a load including an accessory load which can be supported by one stud on the basis of the effective projection area calculated by the effective projection area-calculating device.

16. A design method of steel plate-reinforced concrete structure, the steel plate-reinforced concrete structure being provided with a steel plate frame formed with a plurality of outside steel plates, a stud fixedly installed on an inner face of the outside steel plate, and concrete installed inside the steel plate frame, the design method comprising:

calculating a body load which is determined on the basis of structure conditions including a stud interval and a stud length,
calculating a reference load which can be supported by each one of the studs is determined where the load is supported by the plurality of studs as a whole,

calculating a load ratio of the body load to the reference load which is determined,

calculating an effective projection area which is determined from the load ratio by referring to a relationship between a predetermined load ratio and the effective projection area, and

calculating a load including an accessory load which can be supported by one stud is determined on the basis of the thus determined effective projection area.

17. A steel plate-reinforced concrete structure comprising:

a steel plate frame formed with a plurality of outside steel plates;

a plurality of studs fixedly installed on an inner face of the outside steel plate; and

concrete installed inside the steel plate frame, wherein

the plurality of studs are arranged in a zigzag form.

18. The steel plate-reinforced concrete structure according to Claim 17, wherein
the plurality of studs are arranged so that three mutually adjacent studs take the vertexes of an equilateral triangle.

19. The steel plate-reinforced concrete structure according to Claim 18, wherein
the length of one side of the equilateral triangle is set in accordance with the length of the stud.

20. A construction method of steel plate-reinforced concrete structure, the steel plate-reinforced concrete structure being provided with a steel plate frame formed with a plurality of outside steel plates, a stud installed in a protruded manner from an inner face of the outside steel plate to the inside of the steel plate frame, concrete installed inside the steel plate frame, and an attachment device installed on an outer face of the outside steel plate to attach an accessory, the construction method comprising:

a stud-attaching step in which fixedly installed the stud on the inner face of the outside steel plate;

an attachment device-preparing step in which disposed at least a part of the attachment device at a plurality of attachment positions on the outer face of the outside steel plate to which the accessory is attached via the attachment device;

a steel plate-installing step in which disposed the outside steel plate at a predetermined position to form the steel plate frame;

a concrete-installing step in which installed concrete into the steel plate frame; and

an accessory-installing step in which installed the accessory.

21. The construction method of steel plate-reinforced concrete structure according to Claim 20, wherein
in the attachment device-preparing step, a locking portion for locking the accessory is installed at all the attachment positions, and
as a previous step of the accessory-installing step, an accessory-fixing step is provided in which the accessory is selectively locked to any of the locking portions installed at the attachment position to fix the accessory.

22. A steel plate-reinforced concrete structure comprising:

a steel plate frame formed with a plurality of outside steel plates;

a stud installed in a protruded manner from an inner face of the outside steel plate to the inside of the steel plate frame;

concrete installed inside the steel plate frame; and

an attachment device installed on an outer face of the outside steel plate to attach the accessory, wherein

the attachment device is provided with an attachment plate which attaches and supports the accessory and a locking portion which is installed at a plurality of attachment positions on an outer face of the outside steel plate to which the accessory can be attached, and

the attachment device is constituted in such a manner that the attachment plate can be selectively locked to any of the locking portions installed at the attachment positions and fixed accordingly.

23. The steel plate-reinforced concrete structure according to Claim 22, wherein
the locking portion is an engagement recess portion or an engagement raised portion which is engaged with a raised portion or a recess portion installed on the accessory to lock the attachment plate.

24. A steel plate-reinforced concrete structure comprising:

a steel plate frame formed with a plurality of outside steel plates;
a stud which is fixed to the outside steel plate and installed in a protruded manner into the steel plate frame; and
concrete installed inside the steel plate frame, wherein
a through-hole is formed on the outside steel plate so as to pass through from the inner face of the outside steel plate to the outer face,
a shaft portion of the stud is inserted to the through-hole, and
the stud is fixed to the outside steel plate so that the outside steel plate is held between a pair of holding portions integrally formed on the shaft portion.

# FIG. 1

(a)

(b)

EP 2 620 563 A1

# FIG. 2

(a)

(b)

EP 2 620 563 A1

# FIG. 3

EP 2 620 563 A1

FIG. 4

(a)                                    (b)

EP 2 620 563 A1

FIG. 5

FIG. 6

# FIG. 7

(a)

(b)

EP 2 620 563 A1

FIG. 8

## FIG. 9

FIG. 10

(a)

(b)

EP 2 620 563 A1

EP 2 620 563 A1

FIG. 11

FIG. 12

(a)

(b)

EP 2 620 563 A1

FIG. 13

FIG. 14

FIG. 15

FIG. 16

(a)

(b)

EP 2 620 563 A1

FIG. 17

(a)

(b)

EP 2 620 563 A1

FIG. 18

(a)

(b)

EP 2 620 563 A1

FIG. 19

(a)

(b)

EP 2 620 563 A1

FIG. 20

FIG. 21

(a)

401(403,404)

410

Ps

402

(b)

402    402    402

402a

402b

401

Le

D

FIG. 22

420

411

STRUCTURE CONDITION INPUT DEVICE

STRUCTURE CONDITIONS SUCH AS INTERVAL
OF STUDS AND DIAMETER OF STUD

412

BODY LOAD-CALCULATING DEVICE

REFERENCE LOAD-CALCULATING DEVICE — 413

BODY LOAD

414

REFERENCE LOAD

LOAD RATIO-CALCULATING DEVICE

LOAD RATIO

STORAGE DEVICE — 415

EFFECTIVE PROJECTION AREA-CALCULATING DEVICE — 416

EFFECTIVE PROJECTION AREA

LOAD-CALCULATING DEVICE — 417

SUPPORTABLE LOAD

# FIG. 23

(a)

401

402

Ac(circle)

(b)

401

402

Ac(square)

(c)

401

402

Ac(circle)-Ac(square)

FIG. 24

FIG. 25

FIG. 26

(a)

(b)

FIG. 27

(a) Ac(circle)

(b) Ac(square)

(c)

(d)

FIG. 28

FIG. 29

## FIG. 30

$$P = 2 \times Le + D$$

Ac

45°     45°

502a

501

Le

502

502b

D

## FIG. 31

**507b** (LOAD TRANSFERRED TO THREE STUDS)

○

○          ○          ○

○

○          ○

○

○

**502**

○

○          ○          ○

**507b** (LOAD TRANSFERRED
TO SEVEN STUDS)

**507b** (LOAD TRANSFERRED
TO FOUR STUDS)

FIG. 32

(a)                        (b)

FIG. 33

FIG. 34

FIG. 35

FIG. 36

## FIG. 37

## FIG. 38

# FIG. 39

(a)

(b)

(c)

IN THE CASE OF LOAD RECEIVED BY FOUR STUDS, AT THE CENTER OF FOUR STUDS

IN THE CASE OF LOAD RECEIVED BY TWO STUDS, AT THE MIDPOINT BETWEEN TWO STUDS

IN THE CASE OF LOAD RECEIVED BY ONE STUD, DIRECTLY ABOVE THE STUD

## FIG. 40

## FIG. 41

(a)                              (b)

FIG. 42

FIG. 43

FIG. 44

FIG. 45

## INTERNATIONAL SEARCH REPORT

| International application No. |
|---|
| PCT/JP2011/070552 |

**A. CLASSIFICATION OF SUBJECT MATTER**
*E04B1/14*(2006.01)i, *E04B1/16*(2006.01)i, *E04B1/30*(2006.01)i, *E04B1/48*
(2006.01)i, *E04B2/86*(2006.01)i, *G21C13/00*(2006.01)i

According to International Patent Classification (IPC) or to both national classification and IPC

**B. FIELDS SEARCHED**

Minimum documentation searched (classification system followed by classification symbols)
E04B1/14, E04B1/16, E04B1/30, E04B1/48, E04B2/86, G21C13/00

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 10-160881 A  (Toshiba Corp.),<br>19 June 1998 (19.06.1998),<br>paragraphs [0032] to [0041]; fig. 1, 2, 3, 4, 5<br>(Family: none) | 1-6,24 |
| Y | JP 2002-181980 A  (Toshiba Corp.),<br>26 June 2002 (26.06.2002),<br>paragraphs [0037] to [0039]; fig. 1 to 11<br>& CN 1368738 A | 1-6 |

☒ Further documents are listed in the continuation of Box C.        ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>29 November, 2011 (29.11.11) | Date of mailing of the international search report<br>06 December, 2011 (06.12.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/070552

C (Continuation).   DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 96531/1990(Laid-open No. 55598/1992) (Ishikawajima-Harima Heavy Industries Co., Ltd.), 13 May 1992 (13.05.1992), fig. 1 (Family: none) | 4 |
| Y | JP 05-339992 A  (Daiwa House Industry Co., Ltd.), 21 December 1993 (21.12.1993), paragraphs [0007] to [0010]; fig. 1, 2 (Family: none) | 5 |
| X<br>Y | JP 2000-240196 A  (Kajima Corp.), 05 September 2000 (05.09.2000), paragraphs [0013] to [0016], [0025]; fig. 1 to 4, 7 (Family: none) | 7,8,20,21,22<br>9-14 |
| Y<br>A | JP 8-332572 A  (Japan Drive-it Co., Ltd.), 17 December 1996 (17.12.1996), paragraphs [0007] to [0012]; fig. 1 to 5 (Family: none) | 9-14<br>23 |
| Y | JP 2010-181227 A  (Mitsubishi Heavy Industries, Ltd.), 19 August 2010 (19.08.2010), paragraphs [0032] to [0035]; fig. 2, 3 (Family: none) | 10-14 |
| Y | CD-ROM of the specification and drawings annexed to the request of Japanese Utility Model Application No. 1320/1992(Laid-open No. 57130/1993) (Nippon Fuerasu Kogyo Kabushiki Kaisha), 30 July 1993 (30.07.1993), paragraph [0023]; fig. 1, 2 (Family: none) | 14 |
| X<br>Y | JP 5-195576 A  (Kajima Corp.), 03 August 1993 (03.08.1993), fig. 1, 4 (Family: none) | 17<br>18,19 |
| Y | JP 9-287204 A  (Mitsubishi Heavy Industries, Ltd.), 04 November 1997 (04.11.1997), paragraph [0009]; fig. 1 to 3 (Family: none) | 18,19 |

Form PCT/ISA/210 (continuation of second sheet) (July 2009)

**INTERNATIONAL SEARCH REPORT**

| | International application No. |
|---|---|
| | PCT/JP2011/070552 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 60-047140 A  (Mitsubishi Heavy Industries, Ltd.),<br>14 March 1985 (14.03.1985),<br>page 3, upper right column, lines 11 to 19;<br>fig. 7 to 9<br>(Family: none) | 24 |
| A | JP 2007-169968 A  (Obayashi Corp.),<br>05 July 2007 (05.07.2007),<br>claims 1 to 9; fig. 1 to 4<br>(Family: none) | 15,16 |

Form PCT/ISA/210 (continuation of second sheet) (July 2009)

# EP 2 620 563 A1

| INTERNATIONAL SEARCH REPORT | International application No. |
|---|---|
| | PCT/JP2011/070552 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
     See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

70

**INTERNATIONAL SEARCH REPORT**

International application No.

PCT/JP2011/070552

Continuation of Box No.III of continuation of first sheet(2)

The invention in claim 1, the invention in claim 7, the invention in claim 9, the invention in claim 15, the invention in claim 17, the invention in claim 20 and the invention in claim 24 have a common technical feature relevant to such a matter that "accessory articles is attached to a concrete structure with use of an attachment plate, said concrete structure being equipped with a steel plate frame formed from multiple surface steel sheets, multiple bar members firmly provided on the inner surfaces of the surface steel sheets, and concrete installed in the steel plate frame" or a part of the matter. However, the technical feature comprising said matter cannot be considered to be a special technical feature, since the technical feature does not make a contribution over the prior art in the light of the contents disclosed in the document 1 (JP 10-160881 A (Toshiba Corp.), 19 June 1998 (19.06.1998), paragraphs [0032]-[0041], fig. 1, 2, 3, 4, 5), the document 5 (JP 2000-240196 A (Kajima Corp.), 5 September 2000 (05.09.2000), paragraphs [0013]-[0016], [0025], fig. 1-4, 7). Further, there is no other same or corresponding special technical feature among these inventions.

In conclusion, this international application does not comply with the requirement of unity of invention.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010213808 A
- JP 2010235468 A
- JP 2010280561 A
- JP 2011040004 A
- JP 2011040006 A
- JP 2011040007 A
- JP 2011040009 A
- JP 2001248246 A
- JP 2003328433 A
- JP 2007169968 A